# EUROPÄISCHE PATENTSCHRIFT

(11) **EP 4 284 589 B1**
(45) Veröffentlichungstag und Bekanntmachung des Hinweises auf die Patenterteilung: **23.10.2024**
(21) Anmeldenummer: 21844284.6
(22) Anmeldetag: 21.12.2021
(51) Int. Cl.: B23K 26/0622, B23K 26/06, B23K 26/067, B23K 26/53, B23K 103/00

(54) **VORRICHTUNG UND VERFAHREN ZUM LASERBEARBEITEN EINES WERKSTÜCKS**
APPARATUS AND METHOD FOR LASER-MACHINING A WORKPIECE
DISPOSITIF ET PROCÉDÉ POUR L'USINAGE LASER D'UNE PIÈCE

(30) Priorität: 26.01.2021 DE 102021101598
(43) Veröffentlichungstag der Anmeldung: 06.12.2023
(73) Patentinhaber: TRUMPF Laser- und Systemtechnik SE, 71254 Ditzingen (DE)
(72) Erfinder: FLAMM, Daniel, 71640 Ludwigsbug (DE); JENNE, Michael, 71254 Ditzingen (DE); HEIMING, Henning, 48734 Reken (DE)
(74) Vertreter: Trumpf Patentabteilung
(86) Internationale Anmeldenummer: PCT/EP2021/087159
(87) Internationale Veröffentlichungsnummer: WO 2022/161710

(56) Entgegenhaltungen:
- WO-A1-2020/212175
- DE-A1- 102014 116 958
- US-A1- 2021 001 430

## Beschreibung

Die Erfindung betrifft eine Vorrichtung zum Laserbearbeiten eines Werkstücks, umfassend eine Strahlformungseinrichtung zur Ausbildung einer Fokuszone aus einem auf die Strahlformungseinrichtung einfallenden Eingangslaserstrahl und eine Teleskopeinrichtung zur Abbildung der Fokuszone in ein Material des Werkstücks umfasst, wobei mittels der Strahlformungseinrichtung eine Phasenaufprägung auf einen Strahlquerschnitt des Eingangslaserstrahls derart erfolgt, dass sich die Fokuszone entlang einer zumindest abschnittsweise gekrümmten Längsmittelachse erstreckt, wobei der Teleskopeinrichtung eine Strahlteilungseinrichtung zur Aufteilung von aus der Strahlformungseinrichtung ausgekoppelten Teilstrahlen in eine Mehrzahl von polarisierten Teilstrahlen zugeordnet ist, welche jeweils einen von mindestens zwei unterschiedlichen Polarisationszuständen aufweisen, wobei die Teleskopeinrichtung mit der Strahlteilungseinrichtung zur Fokussierung der polarisierten Teilstrahlen in eine erste Teilfokuszone aus ersten Teilstrahlen mit erstem Polarisationszustand und eine zweite Teilfokuszone aus zweiten Teilstrahlen mit zweitem Polarisationszustand ausgebildet ist, sodass die Fokuszone zumindest abschnittsweise durch räumliche Überlagerung der ersten Teilfokuszone und der zweiten Teilfokuszone gebildet wird und die Fokuszone in einer zu der Längsmittelachse senkrecht orientierten Ebene einen asymmetrischen Querschnitt aufweist.

Weiterhin betrifft die Erfindung ein Verfahren zum Laserbearbeiten eines Werkstücks, bei dem mittels einer Strahlformungseinrichtung eine Fokuszone aus einem auf die Strahlformungseinrichtung einfallenden Eingangslaserstrahl ausgebildet wird, wobei die Fokuszone mittels einer Teleskopeinrichtung in ein Material des Werkstücks abgebildet wird oder abbildbar ist, mittels der Strahlformungseinrichtung eine Phasenaufprägung auf einen Strahlquerschnitt des Eingangslaserstrahls derart erfolgt, dass sich die Fokuszone entlang einer zumindest abschnittsweise gekrümmten Längsmittelachse erstreckt, mittels einer der Teleskopeinrichtung zugeordneten Strahlteilungseinrichtung aus der Strahlformungseinrichtung ausgekoppelte Teilstrahlen in eine Mehrzahl von polarisierten Teilstrahlen aufgeteilt werden, welche jeweils einen von mindestens zwei unterschiedlichen Polarisationszuständen aufweisen, die polarisierten Teilstrahlen in eine erste Teilfokuszone aus ersten Teilstrahlen mit erstem Polarisationszustand und eine zweite Teilfokuszone aus zweiten Teilstrahlen mit zweitem Polarisationszustand fokussiert werden, sodass die Fokuszone zumindest abschnittsweise durch räumliche Überlagerung der ersten Teilfokuszone und der zweiten Teilfokuszone gebildet wird und die Fokuszone in einer zu der Längsmittelachse senkrecht orientierten Ebene einen asymmetrischen Querschnitt aufweist.

Aus der EP 2 859 984 B1 ist ein Verfahren zur Laserbearbeitung eines transparenten Materials bekannt, bei dem ein Laserstrahl bereitgestellt wird, welcher einen Burst von Laserpulsen beinhaltet, und Pulse des Laserstrahls fokussiert werden, wobei das Fokussieren mittels einem oder mehreren aberrationsbehafteten optischen Elementen erfolgt, um eine Strahltaille an einer Stelle zu bilden, die außerhalb des transparenten Materials liegt, um einen verteilten Fokus entlang einer Längsachse des Laserstrahls innerhalb des transparenten Materials zu erzeugen, und wobei der fokussierte Laserstrahl eine ausreichende Energiedichte innerhalb des transparenten Materials aufweist, um ein kontinuierliches Laserfilament darin zu bilden und aufrechtzuerhalten, wobei die entlang des kontinuierlichen Laserfilaments abgeschiedene Laserenergie zu einer inneren Veränderung des Materials führt, wobei die innere Veränderung eine durch das kontinuierliche Filament definierte Form aufweist.

Aus der US 10,173,916 B2 ist ein Verfahren zum Anfasen und/oder Abschrägen einer Kante eines Glassubstrats unter Verwendung von Lasern bekannt.

Aus der US 2020/0147729 A1 ist ein Schneidverfahren zur Ausbildung einer abgeschrägten Ecke mit unterschiedlichen Lichtmustern auf Grundlage von gaußförmigen Strahlen bekannt.

Aus der US 2021/001430 ist ein Verfahren zur Bearbeitung eines transparenten Materials mittels eines Laserstrahls bekannt, welcher ein quasi-nichtbeugendes Strahlprofil mit gekrümmter Form aufweist.

Aus der DE 10 2014 116958 A1 ist ein diffraktives optisches Strahlformungselement zur Aufprägung eines Phasenverlaufs auf einen zur Laserbearbeitung eines Materials vorgesehenen Laserstrahl bekannt, wobei dem Phasenverlauf ein virtuelles optisches Bild zugeordnet ist, das in eine langgezogene Fokuszone zum Ausbilden einer Modifikation im zu bearbeitenden Material abbildbar ist.

Aus der WO 2020/212175 A1 ist eine Bearbeitungsoptik zur Werkstückbearbeitung bekannt, umfassend ein doppelbrechendes Polarisator-Element zur Aufteilung mindestens eines Eingangslaserstrahls in ein Paar von senkrecht zueinander polarisierten Teilstrahlen, sowie eine im Strahlengang nach dem Polarisator-Element angeordnete Fokussieroptik zur Fokussierung der Teilstrahlen auf Fokuszonen in einer Fokusebene.

Der Erfindung liegt die Aufgabe zugrunde, eine eingangs genannte Vorrichtung bereitzustellen, mittels welcher eine Laserbearbeitung eines Werkstücks entlang einer gekrümmten Bearbeitungslinie auf technisch einfache Weise durchführbar ist.

Diese Aufgabe wird bei der eingangs genannten Vorrichtung erfindungsgemäß dadurch gelöst, dass die Strahlteilungseinrichtung ein doppelbrechendes Polarisatorelement aufweist, mittels welchem sowohl ein Ortsversatz als auch ein Winkelversatz zwischen den aus der Strahlteilungseinrichtung ausgekoppelten ersten Teilstrahlen und zweiten Teilstrahlen erzeugt wird, wobei die aus der Strahlteilungseinrichtung ausgekoppelten ersten Teilstrahlen parallel zu einer optischen Achse der Teleskopeinrichtung orientiert sind und wobei die Strahlteilungseinrichtung ein in longitudinaler Richtung nach dem doppelbrechenden Polarisatorelement angeordnetes weiteres optisches Element aufweist, welches eingerichtet ist, um die ersten Teilstrahlen parallel zur optischen Achse der Teleskopeinrichtung auszurichten.

Eine Variante einer Vorrichtung zum Laserbearbeiten eines Werkstücks umfasst eine Strahlformungseinrichtung zur Ausbildung einer Fokuszone aus einem auf die Strahlformungseinrichtung einfallenden Eingangslaserstrahl und eine Teleskopeinrichtung zur Abbildung der Fokuszone in ein Material des Werkstücks, wobei mittels der Strahlformungseinrichtung eine Phasenaufprägung auf einen Strahlquerschnitt des Eingangslaserstrahls derart erfolgt, dass sich die Fokuszone entlang einer zumindest abschnittsweise gekrümmten Längsmittelachse erstreckt und dass die Fokuszone in einer zu der Längsmittelachse senkrecht orientierten Ebene einen asymmetrischen Querschnitt aufweist.

Mittels der Strahlformungseinrichtung lässt sich die genannte Fokuszone durch entsprechende Phasenaufprägung auf den Strahlquerschnitt des Eingangslaserstrahls auf technisch einfache Weise und mit einer geringen Anzahl an Komponenten realisieren.

Insbesondere bildet die Fokuszone einen Wechselwirkungsbereich, wobei sich durch Beaufschlagung eines Materials des Werkstücks mit diesem Wechselwirkungsbereich lokalisierte Materialmodifikationen ausbilden lassen, mittels welchen insbesondere eine Trennung des Materials ermöglicht wird.

Dadurch, dass sich die Fokuszone entlang einer zumindest abschnittsweise gekrümmten Längsmittelachse erstreckt, lässt sich beispielsweise an dem Werkstück ein zumindest abschnittsweise gekrümmter Bereich in einfacher Überfahrt und/oder ohne Anstellen einer Optik bearbeiten. Es lässt sich dadurch beispielsweise ein abgerundeter Bereich an dem Werkstück modifizieren und/oder von dem Werkstück abtrennen. Beispielsweise lässt sich dadurch ein Kantenbereich des Werkstücks abrunden.

Mittels des asymmetrischen Querschnitts der Fokuszone lässt sich eine Rissbildung zwischen in Vorschubrichtung zueinander benachbarten Modifikationsbereichen kontrollieren und/oder optimieren. Insbesondere lassen sich dadurch Risse zumindest näherungsweise parallel zu einer kürzesten Verbindungslinie zwischen einander benachbarten Modifikationsbereichen ausrichten. Es lässt sich dadurch eine optimierte Trennung des Werkstücks erreichen.

Insbesondere kann es vorgesehen sein, dass eine Phasenverteilung von an einer Strahlausgangsseite der Strahlformungseinrichtung ausgekoppelten Teilstrahlen unstetig ist und/oder Sprungstellen aufweist. Es lässt sich dadurch durch Interferenz und insbesondere durch nicht vollständig konstruktive Interferenz der ausgekoppelten Teilstrahlen eine Fokuszone mit asymmetrischem Querschnitt erzeugen.

Unter einem asymmetrischen Querschnitt ist insbesondere zu verstehen, dass ein Durchmesser eines Strahls und/oder einer Fokuszone unterschiedliche Durchmesser in x-Richtung und y-Richtung aufweist, wobei die x-Richtung und die y-Richtung insbesondere zueinander senkrecht orientiert sind und/oder in einer zu einer Strahlausbreitungsrichtung senkrecht orientierten Ebene liegen.

Zur Bestimmung von räumlichen Dimensionen der Fokuszone, wie z.B. einer Länge und/oder eines Durchmessers der Fokuszone, wird die Fokuszone in einer modifizierten Intensitätsverteilung betrachtet, welche nur Intensitätswerte aufweist, die oberhalb einer bestimmten Intensitätsschwelle liegen, wobei die Intensitätsschwelle insbesondere 50% eines globalen Intensitätsmaximums der tatsächlichen Intensitätsverteilung beträgt. Unter einer Länge der Fokuszone bzw. unter einem Durchmesser der Fokuszone ist eine maximale Erstreckungslänge und/oder eine Länge maximaler Ausdehnung der Fokuszone entlang der Längsmittelachse der Fokuszone bzw. in einer zu der Längsmittelachse senkrecht orientierten Ebene unter Zugrundelegung der modifizierten Intensitätsverteilung zu verstehen.

Insbesondere ist die Längsmittelachse der Fokuszone gekrümmt und/oder durchgängig gekrümmt und/oder über eine gesamte Länge der Fokuszone gekrümmt.

Bei der erfindungsgemäßen Variante der Vorrichtung wird der asymmetrische Querschnitt der Fokuszone durch Aufteilung von Strahlen mittels der Strahlteilungseinrichtung realisiert. Die Fokuszone wird dadurch insbesondere durch inkohärente Überlagerung und/oder Superposition von ersten Teilstrahlen mit erstem Polarisationszustand und zweiten Teilstrahlen mit zweitem Polarisationszustand gebildet.

Es ist grundsätzlich auch möglich, dass mittels der Strahlteilungseinrichtung Teilstrahlen mit mehr als zwei unterschiedlichen Polarisationszuständen ausgebildet werden und/oder dass die Fokuszone aus mehr als zwei unterschiedlichen Teilfokuszonen ausgebildet wird.

Unter Überlappen ist insbesondere ein zumindest teilweises räumliches Überlagern zu verstehen, wobei dies insbesondere zur Addition von Intensitäten der ersten Teilfokuszone und der zweiten Teilfokuszone dient.

Unter Teilstrahlen mit unterschiedlichen Polarisationszuständen sind insbesondere linear polarisierte Teilstrahlen zu verstehen, wobei insbesondere Polarisationsrichtungen von ersten Teilstrahlen mit erstem Polarisationszustand und zweiten Teilstrahlen mit zweitem Polarisationszustand unter einem Winkel von 90° zueinander ausgerichtet sind.

Insbesondere kann es vorgesehen sein, dass die Fokuszone zumindest abschnittsweise durch Überlagerung einer räumlichen Intensitätsverteilung der ersten Teilfokuszone und der zweiten Teilfokuszone gebildet wird. Es lässt sich dadurch auf technisch einfache Weise eine Fokuszone mit asymmetrischem Querschnitt ausbilden.

Es ist grundsätzlich auch möglich, dass die Fokuszone vollständig durch räumliche Überlagerung der ersten Teilfokuszone und der zweiten Teilfokuszone gebildet wird.

Günstig kann es sein, wenn sich die erste Teilfokuszone entlang einer ersten Längsmittelachse erstreckt und sich die zweite Teilfokuszone entlang einer zweiten Längsmittelachse erstreckt, wobei die erste Längsmittelachse und die zweite Längsmittelachse jeweils zumindest abschnittsweise eine gekrümmte Form aufweisen. Es lässt sich dadurch die Fokuszone mit gekrümmter Form und asymmetrischem Querschnitt ausbilden.

Aus dem gleichen Grund kann es vorteilhaft sein, wenn die erste Längsmittelachse und die zweite Längsmittelachse einen Ortsversatz in einer zu der ersten Längsmittelachse und/oder der zweiten Längsmittelachse senkrecht orientierten Richtung aufweisen.

Aus dem gleichen Grund kann es günstig sein, wenn die erste Längsmittelachse und die zweite Längsmittelachse zumindest näherungsweise parallel zueinander verlaufen.

Insbesondere kann es vorgesehen sein, dass die ersten Teilstrahlen und die zweiten Teilstrahlen zueinander inkohärent sind und/oder dass die ersten Teilstrahlen und die zweiten Teilstrahlen keine feste Phasenbeziehung zueinander aufweisen. Die Fokuszone wird dadurch insbesondere durch inkohärente Überlagerung und/oder Superposition der ersten Teilstrahlen und zweiten Teilstrahlen ausgebildet.

Insbesondere kann es vorgesehen sein, dass die Strahlteilungseinrichtung in einem Fernfeldbereich der Teleskopeinrichtung angeordnet ist und/oder dass die Strahlteilungseinrichtung zumindest näherungsweise in einer Brennebene der Teleskopeinrichtung angeordnet ist. Die Strahlteilungseinrichtung lässt sich dadurch auf technisch einfache Weise in die Teleskopeinrichtung integrieren.

Unter einem Fernfeldbereich ist insbesondere ein Bereich innerhalb eines Strahlengangs der Teleskopeinrichtung zu verstehen, in welchem eine ringförmige Intensitätsverteilung um eine optische Achse der Teleskopeinrichtung vorliegt.

Insbesondere kann es vorgesehen sein, dass die Teleskopeinrichtung ein erstes Linsenelement und ein zu dem ersten Linsenelement in Strahlausbreitungsrichtung beabstandetes zweites Linsenelement aufweist, wobei die Strahlteilungseinrichtung zwischen dem ersten Linsenelement und dem zweiten Linsenelement angeordnet ist, und/oder wobei die Strahlteilungseinrichtung zumindest näherungsweise in einer Brennebene des ersten Linsenelements und/oder des zweiten Linsenelements angeordnet ist.

Insbesondere kann es vorgesehen sein, dass die Strahlteilungseinrichtung eine Strahlteileroptik und insbesondere eine Polarisationsstrahlteileroptik ist oder umfasst. Beispielsweise ist die Strahlteileroptik aus einem Quarzkristall hergestellt oder umfasst einen Quarzkristall.

Beispielsweise weist die Strahlteilungseinrichtung mindestens ein doppelbrechendes Element und insbesondere mindestens ein doppelbrechendes Keilelement auf.

Das weitere optische Element der Strahlteilungseinrichtung ist z.B. ein isotropes Element oder ein weiteres doppelbrechendes Polarisatorelement.

Insbesondere ist das weitere optische Element zur Veränderung des Ortsversatzes und/oder des Winkelversatzes zwischen den aus der Strahlteilungseinrichtung ausgekoppelten ersten Teilstrahlen und zweiten Teilstrahlen ausgebildet.

Vorteilhaft kann es sein, wenn mittels der Strahlteilungseinrichtung einfallende Strahlen jeweils in voneinander verschiedene Teilstrahlen mit unterschiedlichen Polarisationszuständen aufgeteilt werden, wobei aus der Strahlteilungseinrichtung ausgekoppelte Teilstrahlen mit unterschiedlichen Polarisationszuständen einen Winkelversatz aufweisen. Aus dem Winkelversatz resultiert nach Abbildung der Teilstrahlen mittels der Teleskopeinrichtung ein Ortsversatz der Teilstrahlen mit unterschiedlichen Polarisationszuständen.

Insbesondere kann es vorgesehen sein, dass aus der Strahlteilungseinrichtung ausgekoppelte erste Teilstrahlen mit erstem Polarisationszustand parallel zu einer optischen Achse der Teleskopeinrichtung orientiert sind. Es ergibt sich dadurch ein verringerter Justageaufwand.

Die beiden vorstehend genannten Varianten der erfindungsgemäßen Vorrichtung weisen insbesondere jeweils ein oder mehrere der nachfolgend beschriebenen Merkmale und/oder Vorteile auf.

Insbesondere kann es vorgesehen sein, dass die Fokuszone und/oder ein der Fokuszone zugeordnetes Zwischenbild durch Interferenz und insbesondere durch abschnittsweise konstruktive Interferenz von aus der Strahlformungseinrichtung ausgekoppelten Teilstrahlen gebildet wird.

Insbesondere kann es vorgesehen sein, dass die Teleskopeinrichtung ein erstes Linsenelement und ein zu dem ersten Linsenelement in Strahlausbreitungsrichtung beabstandetes zweites Linsenelement aufweist, wobei mittels des ersten Linsenelements eine Einkopplung von Strahlen in die Teleskopeinrichtung erfolgt und/oder mittels des zweiten Linsenelements eine Auskopplung von Strahlen aus der Teleskopeinrichtung erfolgt.

Insbesondere kann es vorgesehen sein, dass die Teleskopeinrichtung ein erstes Linsenelement und ein zu dem ersten Linsenelement in Strahlausbreitungsrichtung beabstandetes zweites Linsenelement aufweist, wobei das erste Linsenelement eine größere Brennweite aufweist als das zweite Linsenelement.

Bei einer Ausführungsform ist das erste Linsenelement der Teleskopeinrichtung in die Strahlformungseinrichtung integriert oder an der Strahlformungseinrichtung angeordnet. Insbesondere ist eine Funktionalität des ersten Linsenelements in die Strahlformungseinrichtung integriert.

Insbesondere kann es vorgesehen sein, dass die Längsmittelachse der Fokuszone zumindest abschnittsweise einen Krümmungsradius von mindestens 50 µm und/oder höchstens 100 mm aufweist, und/oder dass die Längsmittelachse der Fokuszone einen durchschnittlichen Krümmungsradius von mindestens 200 µm und/oder höchstens 2 mm aufweist.

Beispielsweise weist die Fokuszone und/oder die Längsmittelachse der Fokuszone eine U-Form und/oder eine C-Form und/oder eine Hyperbelform auf.

Insbesondere kann es vorgesehen sein, dass sich die Fokuszone und/oder die Längsmittelachse der Fokuszone zumindest näherungsweise entlang eines Kreisbogenabschnitts erstreckt.

Beispielsweise beträgt ein Mittelpunktswinkel des Kreisbogenabschnitts mindestens 1° und/oder höchstens 90 °.

Beispielsweise erstrecken sich die Fokuszone und/oder die Längsmittelachse der Fokuszone zumindest abschnittsweise entlang eines Viertelkreises.

Insbesondere kann es vorgesehen sein, dass die Fokuszone räumlich zusammenhängend ausgebildet ist. Insbesondere sind die erste Teilfokuszone und/oder die zweite Teilfokuszone räumlich zusammenhängend ausgebildet.

Insbesondere weisen die Fokuszone und/oder die Längsmittelachse der Fokuszone eine stetige und/oder differenzierbare Form auf. Insbesondere weisen die Fokuszone und/oder die Längsmittelachse keine Unstetigkeitsstellen und/oder keine Sprungstellen auf.

Insbesondere ist die Fokuszone linienartig und/oder langgezogen und/oder länglich ausgebildet.

Beispielsweise beträgt eine Länge der Fokuszone mehr als das 10-fache und insbesondere mehr als das 50-fache eines größten Durchmessers der Fokuszone.

Insbesondere kann es vorgesehen sein, dass die Fokuszone eine Länge von mindestens 50 µm und/oder höchstens 20 mm und insbesondere von mindestens 500 µm und/oder höchstens 2 mm aufweist.

Insbesondere kann es vorgesehen sein, dass ein größter Durchmesser der Fokuszone mindestens 500 nm und/oder höchstens 5 µm beträgt.

Günstig kann es sein, wenn ein größter Durchmesser der Fokuszone in einer zu der Längsmittelachse der Fokuszone senkrecht orientierten Ebene entlang der Längsmittelachse zumindest näherungsweise konstant ist. Es lässt sich dadurch eine näherungsweise gleichmäßige Materialbearbeitung über eine Länge der Fokuszone erreichen.

Vorteilhaft kann es sein, wenn mittels der Strahlformungseinrichtung ein quasi-nichtbeugender und/oder Bessel-artiger Strahl erzeugbar ist oder erzeugt wird. Es wird dadurch insbesondere eine Fokuszone mit in Längsrichtung zumindest näherungsweise konstanter transversaler Intensitätsverteilung bereitstellen, wobei unter einer transversalen Intensitätsverteilung eine Intensitätsverteilung in einer zu der Längsmittelachse der Fokuszone senkrecht orientierten Ebene zu verstehen ist.

Insbesondere weist die Fokuszone ein quasi-nichtbeugendes und/oder Bessel-artiges Strahlprofil auf.

Unter quasi-nichtbeugenden Strahlen und/oder Bessel-artigen Strahlen sind insbesondere Strahlen zu verstehen, bei welchen eine transversale Intensitätsverteilung propagationsinvariant ist. Insbesondere ist bei quasinichtbeugenden Strahlen und/oder Bessel-artigen Strahlen eine transversale Intensitätsverteilung längs einer longitudinalen Richtung und/oder Strahlausbreitungsrichtung der Strahlen im Wesentlichen konstant.

Unter einer transversalen Intensitätsverteilung ist eine Intensitätsverteilung zu verstehen, welche in einer zu der longitudinalen Richtung und/oder Strahlausbreitungsrichtung der Strahlen senkrecht orientierten Ebene liegt.

Hinsichtlich der Definition und Eigenschaften quasi-nichtbeugender Strahlen wird auf das Buch "Structured Light Fields: Applications in Optical Trapping, Manipulation and Organisation", M. Wördemann, Springer Science & Business Media (2012), ISBN 978-3-642-29322-1 verwiesen.

Hinsichtlich der Ausbildung und Eigenschaften von quasi-nichtbeugenden und/oder Bessel-artigen Strahlen mit gekrümmter Form wird auf die wissenschaftliche Veröffentlichung "Bessel-like optical beams with arbitrary trajectories" von I. Chremmos et al., Optics Letters, Vol. 37, No. 23 , 1. Dezember 2012, verwiesen.

Hinsichtlich der Ausbildung und Eigenschaften von quasi-nichtbeugenden und/oder Bessel-artigen Strahlen mit asymmetrischem Querschnitt wird auf die wissenschaftliche Veröffentlichung "Generalized axicon-based generation of nondiffracting beams" von K. Chen et al., arXiv: 1911.03103v1 [physics.optics], 8. November 2019, verwiesen.

Insbesondere kann es vorgesehen sein, dass die Fokuszone in einer zu der Längsmittelachse der Fokuszone senkrecht orientierten Ebene einen elliptischen Querschnitt aufweist. Es lässt sich dadurch insbesondere eine Rissbildung und/oder eine Rissorientierung von bei der Laserbearbeitung des Werkstücks ausgebildeten Rissen steuern.

Aus dem gleichen Grund kann es vorteilhaft sein, wenn ein größter Durchmesser einer Querschnittsellipse der Fokuszone zumindest näherungsweise parallel zu einer Vorschubrichtung ausgerichtet ist, in welche das Werkstück zur Ausbildung einer Bearbeitungslinie und/oder Bearbeitungsfläche relativ zu der Fokuszone bewegt wird. Dadurch werden bei der Laserbearbeitung ausgebildete Risse insbesondere zumindest näherungsweise parallel zu der Vorschubrichtung orientiert.

Insbesondere kann es vorgesehen sein, dass mittels der Strahlformungseinrichtung ein Zwischenbild der Fokuszone ausgebildet wird, wobei die Fokuszone durch Abbildung des Zwischenbilds mittels der Teleskopeinrichtung ausgebildet wird. Mittels der Teleskopeinrichtung lässt sich insbesondere eine Länge der Fokuszone anwendungsbasiert anpassen.

Insbesondere kann es vorgesehen sein, dass das Zwischenbild in Strahlausbreitungsrichtung zwischen der Strahlformungseinrichtung und einem zweiten Linsenelement zur Auskopplung von Strahlen aus der Teleskopeinrichtung angeordnet ist und/oder zwischen der Strahlformungseinrichtung und einer Strahlteilungseinrichtung zur Aufteilung von aus der Strahlformungseinrichtung ausgekoppelten Teilstrahlen in eine Mehrzahl von polarisierten Teilstrahlen angeordnet ist.

Vorteilhaft kann es sein, wenn die Strahlformungseinrichtung und/oder die Strahlteilungseinrichtung relativ zu einer optischen Achse der Teleskopeinrichtung und insbesondere um die optische Achse der Teleskopeinrichtung drehbar angeordnet sind. Es lässt sich dadurch eine Ausrichtung der Fokuszone relativ zu dem Werkstück anpassen.

Insbesondere kann es vorgesehen sein, dass die Vorrichtung eine Laserquelle zur Bereitstellung des Eingangslaserstrahls umfasst, wobei mittels der Laserquelle insbesondere ein gepulster Laserstrahl oder ein Ultrakurzpulslaserstrahl bereitgestellt wird.

Beispielsweise beträgt eine Wellenlänge des Eingangslaserstrahls mindestens 300 nm und/oder höchstens 1500 nm. Beispielsweise Beträgt die Wellenlänge 515 nm oder 1030 nm.

Insbesondere weist der Bearbeitungsstrahl eine mittlere Leistung von mindestens 1W bis 1kW auf. Beispielsweise umfasst der Bearbeitungsstrahl Pulse mit einer Pulsenergie von mindestens 10 µJ und/oder höchstens 50 mJ. Es kann vorgesehen sein, dass der Bearbeitungsstrahl Einzelpulse oder Bursts umfasst, wobei die Bursts 2 bis 20 Subpulse und insbesondere einen zeitlichen Abstand von ca. 20ns aufweisen.

Vorteilhaft kann es sein, wenn die Strahlformungseinrichtung mindestens ein diffraktives optisches Element aufweist oder als diffraktives optisches Element ausgebildet ist.

Es ist grundsätzlich auch möglich, dass die Strahlformungseinrichtung als refraktives und/oder reflektives optisches Element ausgeführt ist.

Beispielsweise ist oder umfasst die Strahlformungseinrichtung ein axiconähnliches Element.

Vorteilhaft kann es sein, wenn eine Phasenverteilung von an einer Strahlausgangsseite der Strahlformungseinrichtung ausgekoppelten Teilstrahlen asymmetrisch ist und/oder nicht rotationssymmetrisch ist. Insbesondere ist die Phasenverteilung bezüglich einer Strahlachse des Eingangslaserstrahls und/oder bezüglich einer optischen Achse der Strahlformungseinrichtung asymmetrisch und/oder nicht rotationssymmetrisch. Es lässt sich dadurch die Fokuszone beispielsweise als gekrümmter Bessel-artiger Strahl und/oder beschleunigter Bessel-artiger Strahl erzeugen.

Günstig kann es sein, wenn die Vorrichtung eine weitere Teleskopeinrichtung zur Steuerung eines Durchmessers des auf die Strahlformungseinrichtung einfallenden Eingangslaserstrahls umfasst. Es lässt sich dadurch eine Länge der Fokuszone steuern und/oder regeln.

Beispielsweise ist die weitere Teleskopeinrichtung in Strahlausbreitungsrichtung vor der Strahlformungseinrichtung angeordnet.

Bei einer Variante eines Verfahrens zum Laserbearbeiten eines Werkstücks wird mittels einer Strahlformungseinrichtung eine Fokuszone aus einem auf die Strahlformungseinrichtung einfallenden Eingangslaserstrahl ausgebildet, wobei die Fokuszone mittels einer Teleskopeinrichtung in ein Material des Werkstücks abgebildet wird oder abbildbar ist, und wobei mittels der Strahlformungseinrichtung eine Phasenaufprägung auf einen Strahlquerschnitt des Eingangslaserstrahls derart erfolgt, dass sich die Fokuszone entlang einer zumindest abschnittsweise gekrümmten Längsmittelachse erstreckt und dass die Fokuszone in einer zu der Längsmittelachse senkrecht orientierten Ebene einen asymmetrischen Querschnitt aufweist.

Erfindungsgemäß ist es bei dem eingangs genannten Verfahren zum Laserbearbeiten eines Werkstücks vorgesehen, dass die Strahlteilungseinrichtung ein doppelbrechendes Polarisatorelement aufweist, mittels welchem sowohl ein Ortsversatz als auch ein Winkelversatz zwischen den aus der Strahlteilungseinrichtung ausgekoppelten ersten Teilstrahlen und zweiten Teilstrahlen erzeugt wird, wobei die aus der Strahlteilungseinrichtung ausgekoppelten ersten Teilstrahlen parallel zu einer optischen Achse der Teleskopeinrichtung orientiert sind und wobei die Strahlteilungseinrichtung ein in longitudinaler Richtung nach dem doppelbrechenden Polarisatorelement angeordnetes weiteres optisches Element aufweist, welches eingerichtet ist, um die parallel zur optischen Achse der (34, 34') auszurichten.

Das erfindungsgemäße Verfahren weist insbesondere ein oder mehrere Merkmale und/oder Vorteile der vorstehend beschriebenen erfindungsgemäßen Vorrichtungen auf. Vorteilhafte Ausgestaltungen der erfindungsgemäßen Verfahren wurden bereits im Zusammenhang mit den erfindungsgemäßen Vorrichtungen erläutert.

Insbesondere kann es vorgesehen sein, dass das Werkstück aus einem für eine Wellenlänge des Eingangslaserstrahls und/oder der aus dem Eingangslaserstrahl gebildeten Fokuszone transparenten Material hergestellt ist und/oder besteht. Das Material des Werkstücks ist oder umfasst beispielsweise Glas.

Unter einem transparenten Material ist insbesondere ein Material zu verstehen, durch welches mindestens 70 % und insbesondere mindestens 80 % und insbesondere mindestens 90 % der Laserenergie des Bearbeitungsstrahls transmittiert werden.

Insbesondere kann es vorgesehen sein, dass das Werkstück zur Durchführung der Laserbearbeitung mit der Fokuszone beaufschlagt wird, und insbesondere dass das Werkstück relativ zu der Fokuszone entlang einer Bearbeitungslinie oder Bearbeitungsfläche bewegt wird. Es lassen sich dadurch in dem Werkstück entlang der Bearbeitungslinie oder Bearbeitungsfläche angeordnete Materialmodifikationen ausbilden.

Insbesondere kann es vorgesehen sein, dass das Werkstück nach Durchführung der Laserbearbeitung längs einer Bearbeitungslinie und/oder Bearbeitungsfläche trennbar ist oder getrennt wird.

Vorteilhaft kann es sein, wenn das Material des Werkstücks entlang der Bearbeitungslinie und/oder Bearbeitungsfläche durch Ausübung einer thermischen Beaufschlagung und/oder einer mechanischen Spannung und/oder durch Ätzen mittels mindestens einer nasschemischen Lösung trennbar ist oder getrennt wird.

Insbesondere kann es vorgesehen sein, dass der Eingangslaserstrahl ein gepulster Laserstrahl oder ein Ultrakurzpulslaserstrahl ist, und/oder dass die Fokuszone mittels eines gepulsten Laserstrahls oder Ultrakurzpulslaserstrahls ausgebildet wird.

Insbesondere ist ein Achsensystem zum Verfahren und/oder Neigen des Werkstücks relativ zu der Fokuszone vorgesehen.

Zur Steuerung einer Laserquelle zur Bereitstellung des Eingangslaserstrahls kann eine Regelelektronik zur ortsaufgelösten Pulskontrolle, insbesondere umfassend Puls-on-demand, vorgesehen sein.

Insbesondere ist eine Werkstückhalterung für das Werkstück vorgesehen, welche insbesondere eine nicht-reflektierende und/oder stark streuende Oberfläche aufweist.

Sofern nicht anders angegeben beziehen sich die genannten Eigenschaften der Fokuszone grundsätzlich auf Eigenschaften der Fokuszone in Luft und/oder auf Eigenschaften der Fokuszone außerhalb des Werkstücks.

Insbesondere sind unter den Angaben "ca." und "zumindest näherungsweise" im Allgemeinen Abweichungen von höchstens 10% zu verstehen. Falls nicht anders angegeben, ist unter den Angaben "ca." und "zumindest näherungsweise" insbesondere zu verstehen, dass ein tatsächlicher Wert und/oder Abstand und/oder Winkel um höchstens 10% von einem idealen Wert und/oder Abstand und/oder Winkel abweicht.

Die nachfolgende Beschreibung bevorzugter Ausführungsformen dient im Zusammenhang mit den Zeichnungen der näheren Erläuterung der Erfindung. Es zeigen:
- Fig. 1: eine schematische Schnittdarstellung einer Ausführungsform einer Vorrichtung zum Laserbearbeiten eines Werkstücks, wobei zwei unterschiedliche Varianten angedeutet sind;
- Fig. 2: eine schematische Schnittdarstellung eines Teilbereichs einer weiteren Ausführungsform einer Vorrichtung zum Laserbearbeiten eines Werkstücks, wobei zwei unterschiedliche Varianten angedeutet sind;
- Fig. 3: eine schematische Darstellung einer Phasenverteilung von Teilstrahlen an einer Strahlausgangsseite einer ersten Ausführungsform einer Strahlformungseinrichtung der Vorrichtung;
- Fig. 4: ein simulierter Intensitätsverteilung einer Fokuszone mit gekrümmtem Verlauf in einer parallel zu einer Längsmittelachse der Fokuszone orientierten z-x-Ebene;
- Fig. 5: eine simulierte Querschnittsdarstellung einer Intensitätsverteilung einer Fokuszone in einer zu einer Längsmittelachse der Fokuszone senkrecht orientierten x-y-Ebene;
- Fig. 6: eine schematische Darstellung einer Phasenverteilung von Teilstrahlen an einer Strahlausgangsseite einer weiteren Ausführungsform einer Strahlformungseinrichtung der Vorrichtung;
- Fig. 7: eine schematische Schnittdarstellung einer ersten Ausführungsform einer Strahlteilungseinrichtung;
- Fig. 8: eine schematische Schnittdarstellung einer weiteren Ausführungsform einer Strahlteilungseinrichtung;
- Fig. 9a: eine schematische Darstellung eine Fokuszone in einem zu einer Längsmittelachse einer Fokuszone parallelen Querschnitt, wobei die Fokuszone durch räumliche Überlagerung einer ersten Teilfokuszone und einer zweiten Teilfokuszone gebildet wird;
- Fig. 9b: eine schematische Querschnittsdarstellung der Fokuszone gemäß Fig. 9a in einer zu einer Längsmittelachse der Fokuszone senkrecht orientierten x-y-Ebene;
- Fig. 10a: eine schematische Querschnittsdarstellung einer Intensitätsverteilung einer Fokuszone in einer zu einer Längsmittelachse der Fokuszone senkrecht orientierten x-y-Ebene;
- Fig. 10b: eine Intensitätsverteilung der Fokuszone gemäß Fig. 10a in x-Richtung bei y=0;
- Fig. 10c: eine Intensitätsverteilung der Fokuszone gemäß Fig. 10a in y-Richtung bei x=0;
- Fig. 11: eine schematische Schnittdarstellung eines Werkstücks, welches mittels einer Fokuszone entlang einer Bearbeitungslinie und/oder Bearbeitungsfläche bearbeitet wird;
- Fig. 12a: eine perspektivische Darstellung eines Beispiels eines Werkstücks, welches entlang einer Bearbeitungslinie und/oder Bearbeitungsfläche in zwei voneinander verschiedene Segmente getrennt wird;
- Fig. 12b: eine perspektivische Darstellung eines weiteren Beispiels eines Werkstücks, welches entlang einer Bearbeitungslinie und/oder Bearbeitungsfläche in zwei voneinander verschiedene Segmente getrennt wird;
- Fig. 13: eine schematische Schnittdarstellung eines Teilbereichs des Werkstücks an einer Bearbeitungslinie und/oder Bearbeitungsfläche, wobei zwischen zueinander beabstandeten Modifikationsbereichen Risse ausgebildet sind.

Gleiche oder funktional äquivalente Elemente sind in sämtlichen Ausführungsbeispielen mit den gleichen Bezugszeichen bezeichnet.

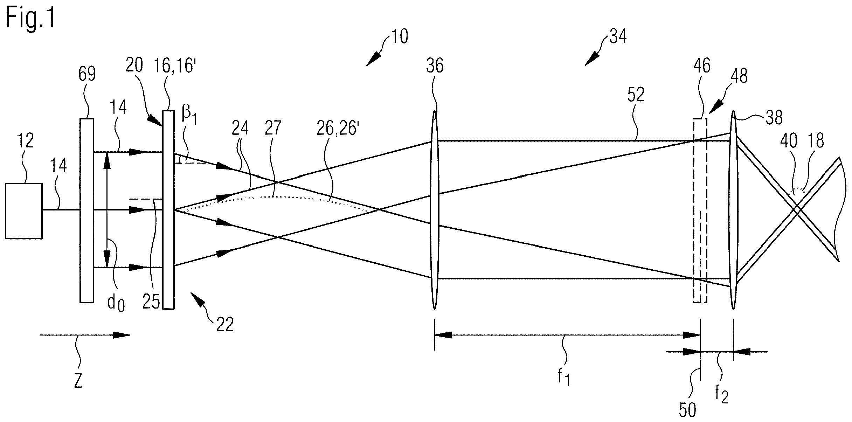

Ein erstes Ausführungsbeispiel einer Vorrichtung zum Laserbearbeiten eines Werkstücks ist in Fig. 1 gezeigt und dort mit 10 bezeichnet. Mittels der Vorrichtung 10 lassen sich an dem Werkstück lokalisierte Materialmodifikationen, beispielsweise Fehlstellen im Submikrometerbereich oder im atomaren Bereich, erzeugen, welche eine Materialschwächung zur Folge haben. Dadurch lässt sich das Werkstück beispielsweise in einem Folgeschritt in zwei voneinander verschiedene Segmente trennen.

Insbesondere umfasst die Vorrichtung 10 eine Laserquelle 12 zur Bereitstellung eines Eingangslaserstrahls 14. Der Eingangslaserstrahl 14 ist insbesondere ein gepulster Laserstrahl und/oder ein Ultrakurzpulslaserstrahl. Beispielsweise ist der Eingangslaserstrahl 14 ein Gauß-Strahl und/oder weist ein beugendes Strahlprofil auf.

Die Vorrichtung 10 umfasst eine Strahlformungseinrichtung 16, in welche der Eingangslaserstrahl 14 einkoppelbar ist. Insbesondere wird der Eingangslaserstrahl 14 in einem Betriebszustand der Vorrichtung 10 in die Strahlformungseinrichtung 16 eingekoppelt.

Der Eingangslaserstrahl 14 breitet sich entlang einer longitudinalen Richtung z aus. Insbesondere ist unter der longitudinalen Richtung z eine Haupt-Strahlausbreitungsrichtung des Eingangslaserstrahls 14 und/oder von aus dem Eingangslaserstrahl 14 gebildeten Strahlen durch die Vorrichtung 10 zu verstehen.

Eine Wellenlänge des Eingangslaserstrahls 14 beträgt beispielsweise 515 nm oder 1030 nm.

Mittels der Strahlformungseinrichtung 16 erfolgt eine Phasenaufprägung auf einen Strahlquerschnitt des Eingangslaserstrahls 14 zur Erzeugung einer langgezogenen Fokuszone 18. Eine Querschnittsrichtung dieses Strahlquerschnitts ist senkrecht zu der longitudinalen Richtung z und/oder zu der Strahlausbreitungsrichtung orientiert.

Der Eingangslaserstrahl 14 trifft an einer Strahleingangsseite 20 auf die Strahlformungseinrichtung 16 und wird in diese eingekoppelt. An einer der Strahleingangsseite 20 gegenüberliegenden Strahlausgangsseite 22 werden phasenmodulierte Teilstrahlen 24 aus der Strahlformungseinrichtung 16 ausgekoppelt.

Die aus der Strahlformungseinrichtung 16 ausgekoppelten Teilstrahlen 24 sind zueinander kohärente Teilstrahlen, d.h. voneinander verschiedene Teilstrahlen 24 weisen eine zueinander feste Phasenbeziehung auf.

Weiter sind die aus der Strahlformungseinrichtung 16 austretenden Teilstrahlen 24 gegenüber dem auf die Strahlformungseinrichtung 16 einfallenden Eingangslaserstrahl 14 und/oder gegenüber einer optischen Achse 25 der Strahlformungseinrichtung 16 mit einem Konuswinkel β₁ geneigt. Insbesondere weisen die Teilstrahlen 24 einen konusförmigen Verlauf und/oder eine konusförmige Einhüllende auf.

Durch Interferenz der Teilstrahlen 24 wird ein der Fokuszone 18 zugeordnetes Zwischenbild 26 ausgebildet, welches in longitudinaler Richtung z hinter der Strahlformungseinrichtung 16 angeordnet ist. Das Zwischenbild 26 der Fokuszone 18 und/oder die Fokuszone 18 weisen eine langgezogene und/oder längliche Form auf.

Insbesondere sind das Zwischenbild 26 und/oder die Fokuszone 18 in longitudinale Richtung z ausgerichtet. Beispielsweise ist eine Haupt-Erstreckungsrichtung des Zwischenbilds 26 und/oder der Fokuszone 18 in longitudinale Richtung z orientiert und/oder parallel zur optischen Achse 25 orientiert.

Das Zwischenbild 26 erstreckt sich entlang einer Längsmittelachse 27 (angedeutet durch die gepunktete Linie in Fig. 1). Die Längsmittelachse 27 ist hierbei insbesondere eine Symmetrieachse des Zwischenbilds 26 in Längsrichtung.

Die erste Strahlformungseinrichtung 16 ist insbesondere als diffraktives optisches Element ausgebildet. Beispielsweise ist die erste Strahlformungseinrichtung als axiconähnliches Element ausgebildet.

Der auf die Teilstrahlen 24 mittels der Strahlformungseinrichtung 16 aufgeprägte Phasenverlauf ist insbesondere derart, dass das Zwischenbild 26 und/oder die Fokuszone 18 ein quasi-nichtbeugendes und/oder Bessel-artiges Strahlprofil aufweisen.

Weiter ist der auf die Teilstrahlen 24 aufgeprägte Phasenverlauf derart, dass das Zwischenbild 26 und/oder die Fokuszone 18 eine gekrümmte Form aufweisen. Entsprechend weist die Längsmittelachse 27, entlang welcher sich die das Zwischenbild 26 erstreckt, eine gekrümmte Form auf.

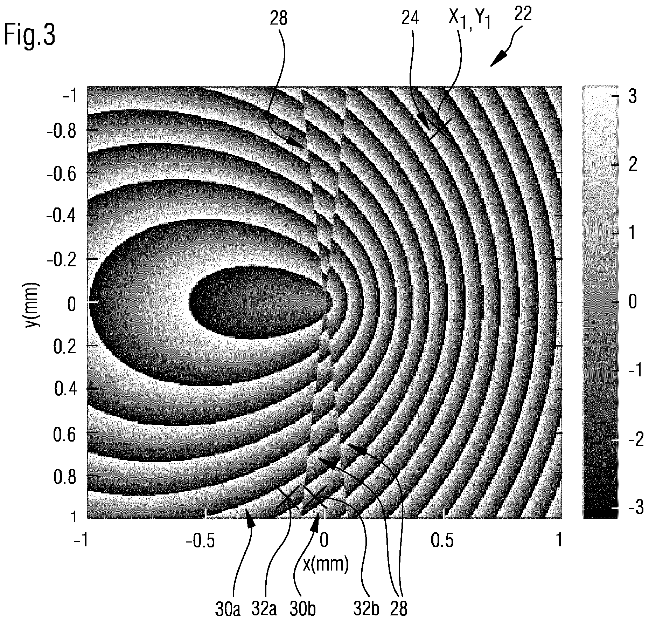

Ein Beispiel einer mittels der Strahlformungseinrichtung 16 auf die Teilstrahlen 24 aufgeprägten Phasenverteilung ist in Fig. 3 illustriert. Die zweidimensionale Phasenverteilung von an der Strahlausgangsseite 22 aus der Strahlformungseinrichtung 16 austretenden Teilstrahlen 24 ist in Fig. 3 mittels eines Graustufenverlaufs veranschaulicht, wobei eine zugeordnete Graustufenskala von Weiß (Phase +Pi) bis Schwarz (Phase -Pi) reicht.

Die Strahlausgangsseite 22 und/oder die gezeigte Phasenverteilung liegen in einer zu der longitudinalen Richtung z quer und insbesondere senkrecht orientierten Ebene.

Jedem an einer räumlichen Position X1, Y1 aus der Strahlformungseinrichtung 16 an der Strahlausgangsseite 22 austretenden Teilstrahl 24 ist ein bestimmter Phasenverschiebungswert im Wertebereich von -Pi bis +Pi zugeordnet, welcher bei dem Beispiel gemäß Fig. 3 anhand der dort gezeigten Phasenverteilung ersichtlich ist.

Bei dem in Fig. 3 gezeigten Beispiel weist die Phasenverteilung an der Strahlausgangsseite 22 einen asymmetrischen und insbesondere nichtrotationssymmetrischen Verlauf auf. Es wird dadurch ein derartiger Phasenverlauf auf die Teilstrahlen 24 aufgeprägt, dass durch Interferenz der Teilstrahlen 24 eine Fokuszone mit gekrümmtem Verlauf ausgebildet wird. Es weisen dadurch das Zwischenbild 26 und/oder die Fokuszone 18 einen gekrümmten Verlauf auf.

Weiter weist die in Fig. 3 gezeigte Phasenverteilung ein oder mehrere Sprungstellen 28 auf, an welchen ein Phasenverlauf zwischen zwei aneinander angrenzenden Teilbereichen 30a, 30b unstetig ist. Beispielsweise weist eine Phasenverschiebung und/oder ein Phasensprung zwischen den aneinander angrenzenden Teilbereichen 30a, 30b einen Wert von Pi auf.

Unter einer Sprungstelle 28 ist eine Trennstelle und/oder Trennlinie zwischen einem ersten Teilbereich 30a und einem an den ersten Teilbereich 30a angrenzenden zweiten Teilbereich 30b zu verstehen.

Insbesondere beträgt eine Phasendifferenz zwischen einem an der Sprungstelle 28 in dem ersten Teilbereich 30a liegenden ersten Grenzpunkt 32a und einem an der Sprungstelle 28 in dem zweiten Teilbereich 30b liegenden zweiten Grenzpunkt 32b Pi.

Insbesondere sind die aneinander angrenzenden Teilbereiche 30a, 30b jeweils lokal stetige Teilbereiche.

Aufgrund der unstetigen und/oder mit Phasensprüngen versehenen Phasenverteilung ist der mittels der Strahlformungseinrichtung 16 auf die Teilstrahlen 24 aufgeprägte Phasenverlauf derart, dass das Zwischenbild 26 und/oder Fokuszone 18 einen asymmetrischen Strahlquerschnitt aufweisen. Bezüglich des Zwischenbilds 26 ist eine Querschnittsebene des Strahlquerschnitts senkrecht zu der Längsmittelachse 27 orientiert.

Die Vorrichtung 10 weist eine Teleskopeinrichtung 34 auf, welche in Strahlausbreitungsrichtung und/oder longitudinaler Richtung z hinter dem Zwischenbild 26 angeordnet ist. Mittels dieser Teleskopeinrichtung 34 wird die Fokuszone 18 durch Abbildung des Zwischenbilds 26 ausgebildet, wobei mittels der Teleskopeinrichtung 34 insbesondere eine verkleinerte Abbildung erfolgt.

Die Teleskopeinrichtung 34 weist ein erstes Linsenelement 36 und ein zu dem ersten Linsenelement 36 in longitudinaler Richtung z beabstandetes zweites Linsenelement 38 auf.

Das erste Linsenelement 36 ist ein langbrennweitiges Linsenelement und/oder ein Eingangslinsenelement der Teleskopeinrichtung 34. Das zweite Linsenelement 38 ist ein Ausgangslinsenelement und/oder kurzbrennweitiges Linsenelement der Teleskopeinrichtung 34. Das zweite Linsenelement 38 ist insbesondere als Objektiv ausgebildet oder weist die Funktion eines Objektivs auf.

Das erste Linsenelement 36 und/oder das zweite Linsenelement 38 sind nicht notwendigerweise einstückig ausgebildet. Insbesondere kann es vorgesehen sein, dass das erste Linsenelement 36 und/oder das zweite Linsenelement 38 jeweils aus mehreren optischen Komponenten ausgebildet ist oder mehrere optische Komponenten umfasst.

Eine erste Brennweite f₁ des ersten Linsenelements 36 ist größer als eine zweite Brennweite f₂ des zweiten Linsenelements 38. Insbesondere beträgt ein Verhältnis f₁/f₂ mindestens 5 und/oder höchstens 50.

Mittels der Teleskopeinrichtung 34 lässt sich die Fokuszone 18 in ein zu bearbeitendes Werkstück einstrahlen und/oder abbilden. Insbesondere lassen sich mittels der Teleskopeinrichtung 34 räumliche Dimensionen der Fokuszone 18 zur Bearbeitung des Werkstücks anpassen.

Insbesondere ist unter der Fokuszone 18 ein fokussierter Bereich zumindest näherungsweise konstanter Intensität zu verstehen, welcher sich entlang einer Längsmittelachse 40 erstreckt (angedeutet durch die gepunktete Linie in Fig. 1). Die Längsmittelachse 40 ist hierbei insbesondere eine Symmetrieachse der Fokuszone 18 in Längsrichtung.

Insbesondere weist die Fokuszone 18 einen sich entlang der Längsmittelachse 40 erstreckenden fokussierten Bereich mit zumindest näherungsweise konstanter Intensität auf.

Insbesondere ist die Fokuszone 18 räumlich zusammenhängend ausgebildet, d.h. der fokussierte Intensitätsbereich der Fokuszone 18 ist jeweils räumlich zusammenhängend ausgebildet.

Es ist allerdings grundsätzlich auch möglich, dass eine Intensität der Fokuszone 18 entlang der Längsmittelachse variierend ist und/oder stellenweise Null beträgt.

Insbesondere ist unter der Fokuszone 18 ein fokussierter Bereich zu verstehen, innerhalb welchem eine Intensität von Laserstrahlung mindestens so groß ist, sodass bei Beaufschlagung eines Materials des Werkstücks mit der Fokuszone 18 modifizierte Bereiche innerhalb des Materials erzeugt werden. Insbesondere ist das Material an diesem modifizierten Bereichen trennbar.

Die Längsmittelachse 40 der Fokuszone 18 weist eine zumindest abschnittsweise und/oder durchgehend gekrümmte Form auf.

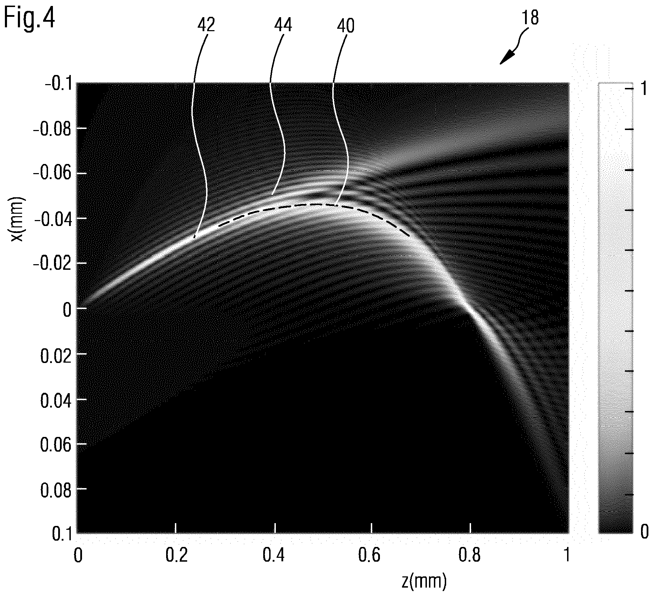

Ein Ausführungsbeispiel der Fokuszone 18 ist in Fig. 4 gezeigt, wobei hier eine Intensitätsverteilung in einer zu der Längsmittelachse 40 parallel orientierten z-x-Ebene dargestellt ist. Hellere Graustufenwerte stehen für größere Intensitäten. Bei dem Ausführungsbeispiel gemäß Fig. 4 weist die Fokuszone 18 eine Bogenform und/oder C-Form auf.

Unter der Fokuszone 18 ist insbesondere eine globale maximale Intensitätsverteilung 42 zu verstehen, welche insbesondere räumlich zusammenhängend ausgebildet ist. Insbesondere ist nur diese globale maximale Intensitätsverteilung 42 für eine Wechselwirkung mit dem zu bearbeitenden Material zur Ausbildung von Modifikationen relevant.

Die maximale Intensitätsverteilung 42 ist insbesondere von nebengeordneten Intensitätsverteilungen 44 umgeben. Diese nebengeordneten Intensitätsverteilungen 44 sind insbesondere um die maximale Intensitätsverteilung 42 angeordnet und/oder beabstandet zu der maximalen Intensitätsverteilung 42 angeordnet. Die nebengeordneten Intensitätsverteilungen 44 sind oder umfassen insbesondere Nebenmaxima.

Insbesondere sind die nebengeordneten Intensitätsverteilungen 44 für eine Laserbearbeitung des Werkstücks unwesentlich, da es aufgrund der geringeren Intensitäten zu keiner und/oder zu einer vernachlässigbaren Ausbildung von Modifikationen im Material des Werkstücks kommt.

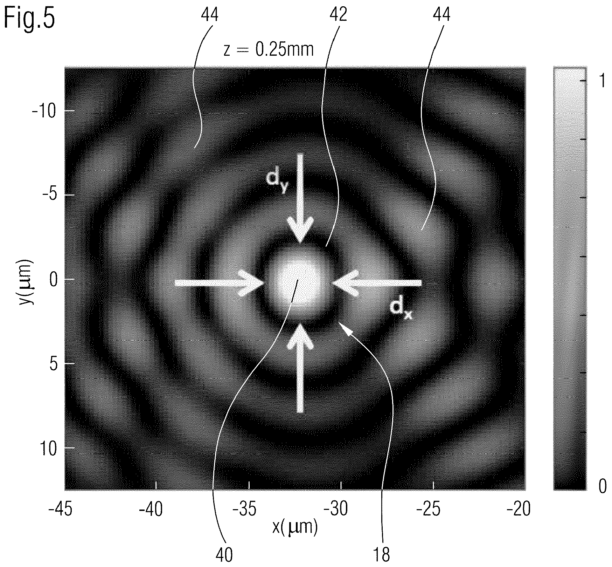

Die Fokuszone 18 weist einen asymmetrischen Strahlquerschnitt auf, wobei eine Querschnittsrichtung senkrecht zur Längsmittelachse 40 orientiert ist. In Fig. 5 ist ein Beispiel der Fokuszone 18 in einer zu der Längsmittelachse 40 senkrecht orientierten x-y-Ebene gezeigt.

Insbesondere weist die Fokuszone 18 einen Durchmesser dₓ in einer x-Richtung und einen Durchmesser d_{y} in einer zu der x-Richtung senkrecht orientierten y-Richtung auf, wobei die x-Richtung und die y-Richtung in einer zu der Längsmittelachse 40 senkrecht orientierten Ebene liegen.

Insbesondere kann es vorgesehen sein, dass die Fokuszone 18 einen elliptischen Strahlquerschnitt aufweist. In diesem Fall ist dₓ und d_{y} voneinander verschieden. Beispielsweise ist dₓ parallel zu einer großen Halbachse einer zugeordneten Ellipse orientiert und d_{y} parallel zu einer kleinen Halbachse.

Bei einer zweiten Variante der Vorrichtung 10 wird im Unterschied zu der vorstehend beschriebenen ersten Variante mittels einer Strahlformungseinrichtung 16' ein der Fokuszone 18 zugeordnetes Zwischenbild 26' ausgebildet, welches einen zumindest näherungsweise symmetrischen Strahlquerschnitt aufweist.

Die Strahlformungseinrichtung 16' bzw. das Zwischenbild 26' weisen insbesondere ein oder mehrere Merkmale und/oder Vorteile der vorstehend beschriebenen Strahlformungseinrichtung 16 bzw. des vorstehend beschriebenen Zwischenbilds 26 auf.

Das Zwischenbild 26' erstreckt sich entlang der Längsmittelachse 27 und weist insbesondere ein quasi-nichtbeugendes und/oder Bessel-artiges Strahlprofil auf.

An der Strahlausgangsseite 22 aus der Strahlformungseinrichtung 16' austretende Teilstrahlen 24 weisen eine anderen Phasenverteilung auf als bei der vorstehend beschriebenen Strahlformungseinrichtung 16.

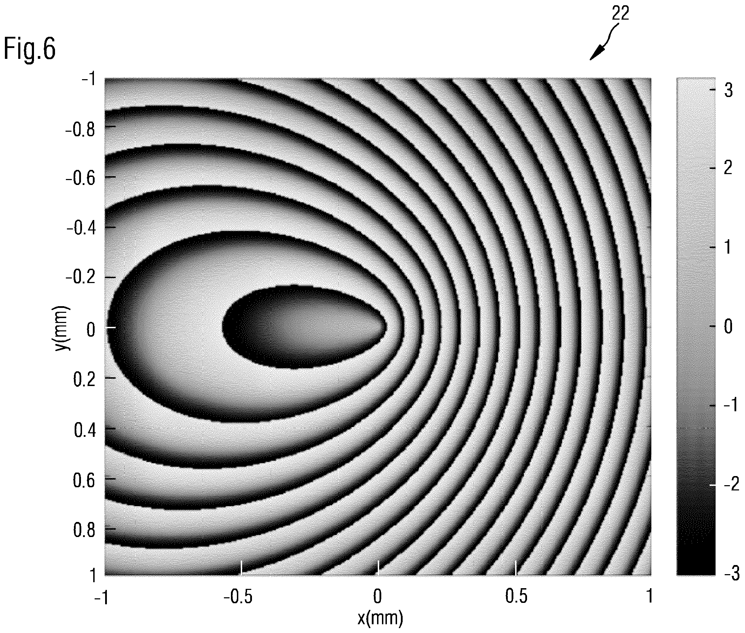

Ein Beispiel einer mittels der Strahlformungseinrichtung 16' auf die Teilstrahlen 24 aufgeprägten Phasenverteilung ist in Fig. 6 in Form einer Graustufenverteilung illustriert (analog zu Fig. 3). Die Phasenverteilung an der Strahlausgangsseite 22 weist einen asymmetrischen und insbesondere nicht rotationssymmetrischen Verlauf auf. Es wird dadurch ein derartiger Phasenverlauf auf die Teilstrahlen 24 aufgeprägt, dass durch Interferenz der Teilstrahlen 24 eine Fokuszone mit gekrümmtem Verlauf ausgebildet wird. Es weisen dadurch das Zwischenbild 26' und/oder die Fokuszone 18 einen gekrümmten Verlauf auf.

Insbesondere ist die in Fig. 6 gezeigte Phasenverteilung stetig und insbesondere global stetig. Insbesondere weist die in Fig. 6 gezeigte Phasenverteilung keine Sprungstellen und/oder Unstetigkeitsstellen auf. Es wird dadurch ein derartiger Phasenverlauf auf die Teilstrahlen 24 aufgeprägt, dass durch Interferenz der Teilstrahlen 24 eine Fokuszone mit symmetrischem Strahlquerschnitt ausgebildet wird. Das Zwischenbild 26' weist dadurch einen symmetrischen Strahlquerschnitt auf, wobei eine Querschnittsrichtung senkrecht zu der Längsmittelachse 27 orientiert ist.

Zur Realisierung des asymmetrischen Strahlquerschnitts der Fokuszone 18 umfasst die Vorrichtung 10 bei dieser zweiten Variante eine Strahlteilungseinrichtung 46 (angedeutet durch die gestrichelte Linie in Fig. 1), welche der Teleskopeinrichtung 34 zugeordnet ist. Beispielsweise ist die Strahlteilungseinrichtung 46 Teil der Teleskopeinrichtung 34 und/oder in einem Strahlengang der Teleskopeinrichtung 34 angeordnet. Beispielsweise ist oder umfasst die Strahlteilungseinrichtung 46 eine Polarisationsstrahlteileroptik.

Die Strahlteilungseinrichtung 46 ist insbesondere in einem Fernfeldbereich 48 und/oder in einer Brennebene 50 der Teleskopeinrichtung 34 angeordnet. Beispielsweise ist die Brennebene 50 eine Brennebene des ersten Linsenelements 36 und/oder des zweiten Linsenelements 38.

Aus der Strahlformungseinrichtung 16' ausgekoppelte Teilstrahlen 24 und/oder von dem Zwischenbild 26' ausgehende Strahlen treffen als einfallende Strahlen 52 auf die Strahlteilungseinrichtung 46. Mittels der Strahlteilungseinrichtung 46 werden diese einfallenden Strahlen 52 jeweils in voneinander verschiedene Teilstrahlen 54a, 54b mit unterschiedlichen Polarisationszuständen aufgeteilt.

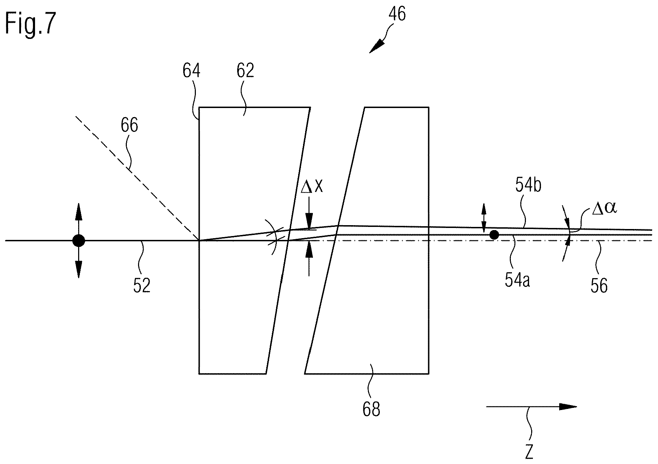

Bei dem in Fig. 7 gezeigten Beispiel der Strahlteilungseinrichtung 46 werden einfallende Strahlen 52 mittels der Strahlteilungsvorrichtung 56 jeweils in erste Teilstrahlen 54a mit erstem Polarisationszustand und zweite Teilstrahlen 54b mit zweitem Polarisationszustand aufgeteilt.

Der erste Polarisationszustand und der zweite Polarisationszustand sind insbesondere zueinander senkrecht orientierte Polarisationszustände und/oder lineare Polarisationszustände. Insbesondere sind die ersten Teilstrahlen 54a und die zweiten Teilstrahlen 54b derart polarisiert, dass ein elektrisches Feld in einer Ebene senkrecht zur longitudinalen Richtung z und/oder Strahlausbreitungsrichtung liegt (transversal elektrisch).

Die ersten Teilstrahlen 54a weisen zu den zweiten Teilstrahlen 54b einen Ortsversatz Δx und einen Winkelversatz Δα auf.

Insbesondere sind die ersten Teilstrahlen 54a zumindest näherungsweise parallel zu einer optischen Achse 56 der Teleskopeinrichtung 34 orientiert, wobei die optische Achse 56 beispielsweise parallel zu der optischen Achse 25 der Strahlformungseinrichtung 16, 16' orientiert ist oder mit dieser zusammenfällt.

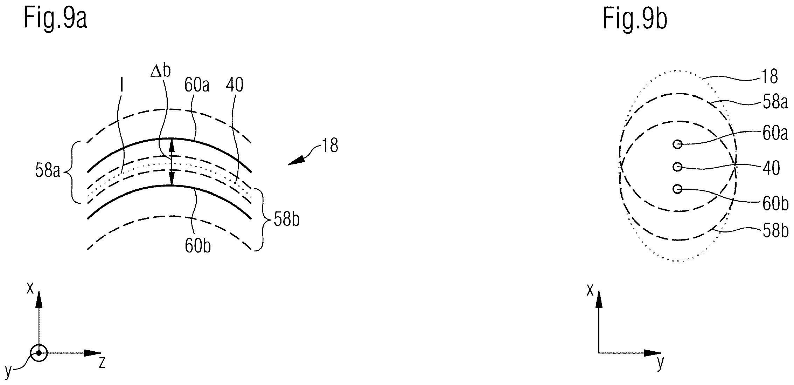

Die aus der Strahlteilungseinrichtung 46 ausgekoppelten ersten Teilstrahlen 54a werden mittels der Teleskopeinrichtung 34 und/oder mittels des zweiten Linsenelements 38 in eine erste Teilfokuszone 58a abgebildet. Entsprechend werden die aus der Strahlteilungseinrichtung 46 ausgekoppelten zweiten Teilstrahlen 54b mittels der Teleskopeinrichtung 34 und/oder mittels des zweiten Linsenelements 38 in eine zweite Teilfokuszone 58b abgebildet (Fig. 9a und 9b).

Aufgrund des Winkelversatzes der ersten Teilstrahlen 54a und der zweiten Teilstrahlen 54b ergibt sich nach Fokussierung mittels der Teleskopeinrichtung 34 ein Ortsversatz Δb zwischen der ersten Teilfokuszone 58a und der zweiten Teilfokuszone 58b in einer zu der Längsmittelachse 40 senkrecht orientierten Richtung.

Die erste Teilfokuszone 58a erstreckt sich längs einer ersten Längsmittelachse 60a und die zweite Teilfokuszone 58b erstreckt sich längs einer zweiten Längsmittelachse 60b. Die erste Längsmittelachse 60a und die zweite Längsmittelachse 60b erstrecken sich in longitudinaler Richtung z und/oder in Strahlausbreitungsrichtung.

Insbesondere weisen die erste Teilfokuszone 58a und die zweite Teilfokuszone 58b jeweils zumindest näherungsweist einen symmetrischen Strahlquerschnitt auf, wobei eine Querschnittsrichtung senkrecht zu der ersten Längsmittelachse 60a bzw. der zweiten Längsmittelachse 60b orientiert ist.

Die Fokuszone 18 wird durch zumindest teilweise räumliche Überlagerung und/oder Superposition der ersten Teilfokuszone 58a und der zweiten Teilfokuszone 58b gebildet. Ein Strahlquerschnitt der dadurch gebildeten Fokuszone 18 ist asymmetrisch und insbesondere elliptisch (vgl. Fig. 9a und 9b).

Die ersten Teilstrahlen 54a und die zweiten Teilstrahlen 54b sind zueinander inkohärente Teilstrahlen und/oder weisen keine feste Phasenbeziehung zueinander auf, sodass die ersten Teilstrahlen 54a und die zweiten Teilstrahlen 54b insbesondere nicht interferieren. Im Fall einer räumlichen Überlagerung der ersten Teilstrahlen 54a und der zweiten Teilstrahlen 54b ergibt sich daher eine Addition von jeweiligen Intensitäten der ersten Teilstrahlen 54a und der zweiten Teilstrahlen 54b.

Bei dem in den Fig. 9a und 9b gezeigten Beispiel ist die erste Längsmittelachse 60a zumindest näherungsweise parallel zu der zweiten Längsmittelachse 60b orientiert. Die Längsmittelachse 40 der Fokuszone 18 liegt symmetrisch und/oder mittig bezüglich der ersten Längsmittelachse 60a und der zweiten Längsmittelachse 60b.

Bei dem in Fig. 7 gezeigten Beispiel umfasst die Strahlteilungseinrichtung 46 ein doppelbrechendes Polarisatorelement 62. Mittels des doppelbrechenden Polarisatorelements 62 wird sowohl ein Ortsversatz Δx als auch ein Winkelversatz Δα zwischen den ersten Teilstrahlen 54a und den zweiten Teilstrahlen 54b erzeugt.

An diesem doppelbrechenden Polarisatorelement 62 ist eine Strahleingangsseite 64 und/oder Strahleingangsfläche der Strahlteilungseinrichtung 46 ausgebildet.

Eine optische Achse 66 des doppelbrechenden Polarisatorelements 62 ist beispielsweise in einem Winkel von 45° zur Strahleingangsseite 64 und/oder zur optischen Achse 56 der Teleskopeinrichtung 34 orientiert.

Weiter umfasst die Strahlteilungseinrichtung 46 ein isotropes Element 68, welches in longitudinaler Richtung z hinter dem doppelbrechenden Polarisatorelement 62 angeordnet ist. Mittels dieses isotropen Elements 68 werden die ersten Teilstrahlen 54a parallel zur optischen Achse 56 ausgerichtet.

Das doppelbrechende Polarisatorelement 62 und/oder das isotrope Element 68 sind beispielsweise keilförmig ausgebildet.

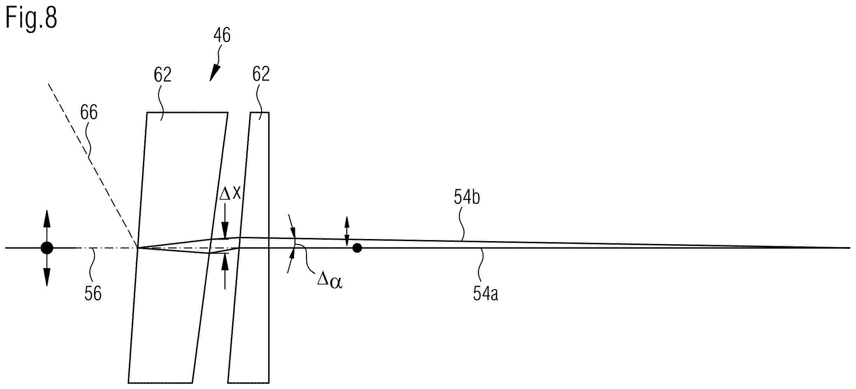

Eine in Fig. 8 gezeigte weitere Ausführungsform unterscheidet sich von der Ausführungsform gemäß Fig. 7 im Wesentlichen dadurch, dass die ersten Teilstrahlen 54a parallel zur optischen Achse 56 der Teleskopeinrichtung 34 orientiert sind und in dieser optischen Achse 56 liegen.

Zur parallelen Ausrichtung ersten Teilstrahlen 54a zu der optischen Achse 56 und deren Positionierung auf der optischen Achse 56 umfasst die Ausführungsform gemäß Fig. 8 zwei hintereinander angeordnete doppelbrechende Polarisatorelemente 62.

Ansonsten weist die Ausführungsform gemäß Fig. 8 grundsätzlich den gleichen Aufbau und/oder die gleiche Funktionsweise auf wie die Ausführungsform gemäß Fig. 7, sodass insoweit auf deren vorstehende Beschreibung verwiesen wird.

Hinsichtlich der Funktionsweise und Ausführung der Strahlteilungseinrichtung 46 wird auf die deutsche Patentanmeldung mit Aktenzeichen 10 2020 207 715.0 (Anmeldetag: 22. Juni 2020) der gleichen Anmelderin verwiesen. Hierauf wird ausdrücklich und vollinhaltlich Bezug genommen.

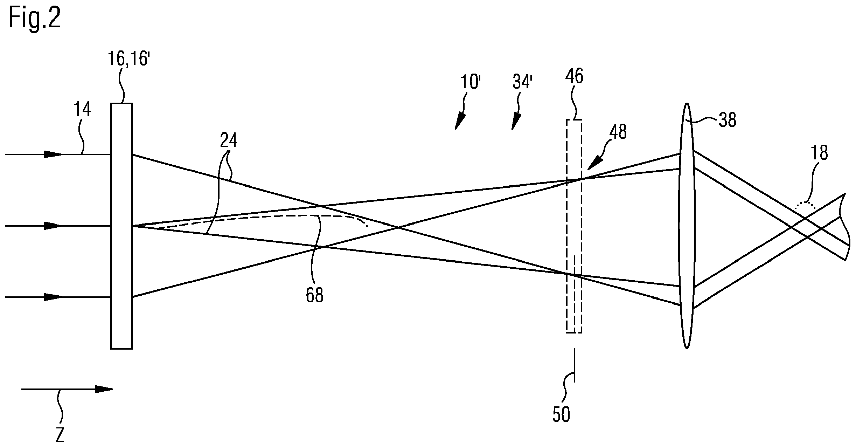

Eine weitere Ausführungsform einer Vorrichtung 10' zum Laserbearbeiten eines Werkstücks (Fig. 2) unterscheidet sich von den vorstehend beschriebenen Ausführungsformen im Wesentlichen dadurch, dass eine alternative Variante einer Teleskopeinrichtung 34' vorgesehen ist.

Bei der Teleskopeinrichtung 34' ist das erste Linsenelement 36 in die Strahlformungseinrichtung 16, 16' integriert oder an der Strahlausgangsseite 22 der Strahlformungseinrichtung angeordnet. Es lässt sich dadurch die Vorrichtung 10' insbesondere besonders kompakt und/oder mit einer verringerten Anzahl an Einzelkomponenten ausführen.

Beispielsweise ist eine Funktionalität des ersten Linsenelements 36 in die Strahlformungseinrichtung 16, 16' integriert.

Ein bei der Vorrichtung 10' ausgebildetes Zwischenbild 68, welches der Fokuszone 18 zugeordnet ist, weist nicht notwendigerweise die Eigenschaften des vorstehend beschriebenen Zwischenbilds 26, 26' auf. Das Zwischenbild 68 ist verglichen mit dem Zwischenbild 26, 26' wegen des vorliegend veränderten Strahlverlaufs abweichend ausgebildet. Insbesondere weist das Zwischenbild 68 verglichen mit dem Zwischenbild 26, 26' und/oder mit der Fokuszone 18 eine andere Form auf.

Ansonsten weist die Vorrichtung 10' grundsätzlich den gleichen Aufbau und die gleiche Funktionsweise auf wie die vorstehend beschriebenen Varianten der Vorrichtungen 10, sodass insoweit auf deren Beschreibung Bezug genommen wird.

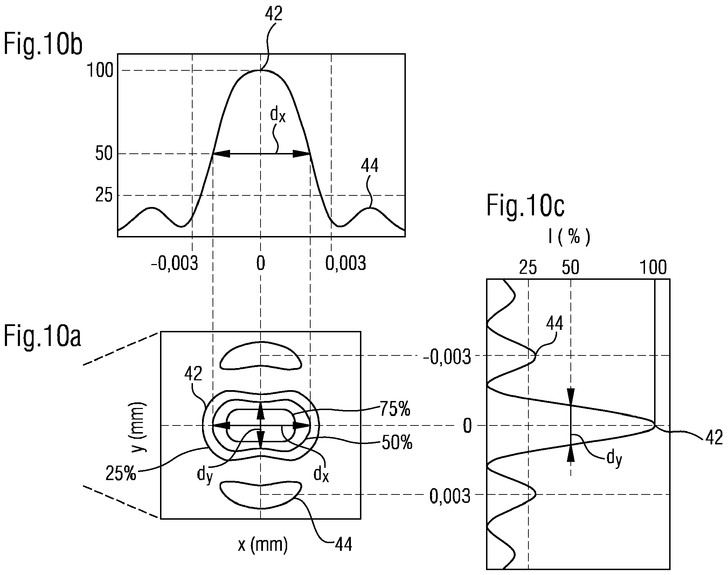

Zur Bestimmung einer Länge l der Fokuszone 18 in Richtung der Längsmittelachse 40 und/oder eines Durchmessers dₓ, d_{y} in einer zu der Längsmittelachse 28 senkrecht orientierten x-Richtung bzw. y-Richtung wird eine modifizierte Intensitätsverteilung betrachtet, welche nur Intensitätswerte aufweist, die oberhalb einer bestimmten Intensitätsschwelle liegen, wobei die Intensitätsschwelle insbesondere 50% eines globalen Intensitätsmaximums der tatsächlichen Intensitätsverteilung beträgt. Dies ist in den Fig. 10a, 10b und 10c für den Durchmesser dₓ, d_{y} der Fokuszone 18 schematisch illustriert.

Unter der Länge l der Fokuszone 18 ist beispielsweise eine maximale Erstreckungslänge und/oder eine Länge maximaler Ausdehnung der Fokuszone 18 entlang der Längsmittelachse 40 unter Zugrundelegung der modifizierten Intensitätsverteilung zu verstehen. Bei dem in Fig. 9a gezeigten Beispiel ist die Länge l beispielsweise eine entsprechende Kurvenlänge und/oder Bogenlänge und/oder Kreisbogenlänge der Fokuszone 18.

Es kann vorgesehen sein, dass die Vorrichtung 10 eine weitere Teleskopeinrichtung 69 umfasst, welche in longitudinaler Richtung z zwischen der Laserquelle 12 und der Strahlformungseinrichtung 16, 16' angeordnet ist. Mittels dieser weiteren Teleskopeinrichtung 42 lässt sich ein Durchmesser d₀ des auf die Strahlformungseinrichtung 16, 16' einfallenden Eingangslaserstrahls 14 steuern und/oder regeln.

Durch Steuerung und/oder Regelung des Durchmessers d₀ lassen sich eine Länge l der Fokuszone und/oder eine Länge des Zwischenbilds 26, 26' der Fokuszone 18 steuern und/oder regeln. Die Länge l nimmt mit zunehmendem Durchmesser dₒ zu.

Die erfindungsgemäße Vorrichtung 10, 10' funktioniert wie folgt:
Zur Durchführung eines Bearbeitungsvorgangs an einem Werkstück 70 mittels der Vorrichtung 10, 10' wird ein Material 72 des Werkstücks 70 mit der Fokuszone 18 beaufschlagt und die Fokuszone 18 relativ zu dem Material 72 bewegt.

Insbesondere ist das Material 72 ein für eine Wellenlänge des Eingangslaserstrahls 14 und/oder der aus dem Eingangslaserstrahl 14 gebildeten Fokuszone 18 transparentes oder teiltransparentes Material. Beispielsweise ist das Material 72 ein Glasmaterial.

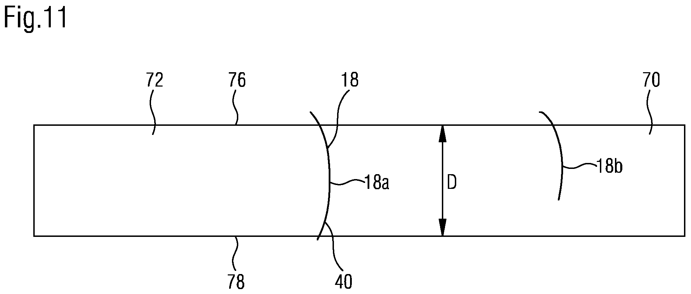

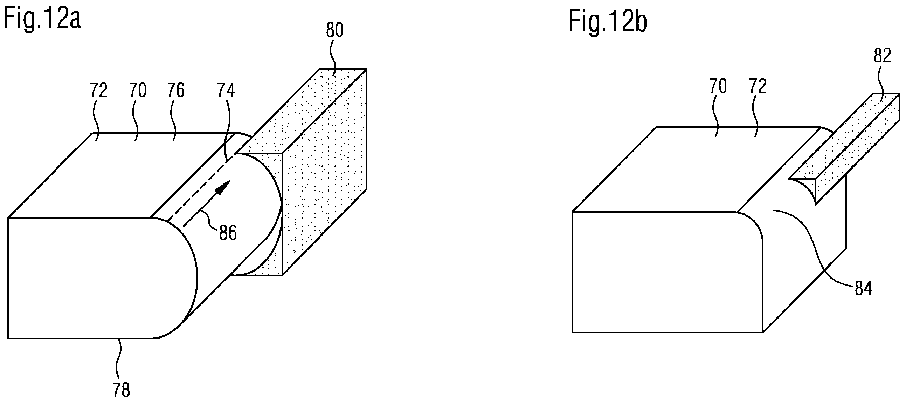

Die Fokuszone 18 wird insbesondere entlang einer vordefinierten Bearbeitungslinie 74 und/oder Bearbeitungsfläche bewegt (Fig. 11, 12a und 12b). Die Bearbeitungslinie 74 kann beispielsweise gerade und/oder gekrümmte Abschnitte aufweisen.

Durch Beaufschlagung des Materials 72 mit der Fokuszone 18 werden an diesem Material 72 an der Bearbeitungslinie 74 und/oder Bearbeitungsfläche lokalisierte Materialmodifikationen ausgebildet, mittels welchen eine Festigkeit des Materials 72 an der Bearbeitungslinie 74 und/oder Bearbeitungsfläche verringert wird.

Es lässt sich dadurch das Material 72 nach Ausbildung der Materialmodifikationen an der Bearbeitungslinie 74 und/oder Bearbeitungsfläche, beispielsweise durch Ausübung einer mechanischen Kraft, in zwei voneinander verschiedene Segmente trennen.

In den Fig. 11, 12a und 12b ist beispielsweise eine Bearbeitung des Materials 72 mittels einer ersten Variante einer Fokuszone 18a gezeigt, welche sich von einer ersten Außenseite 74 zu einer der ersten Außenseite 74 gegenüberliegenden zweiten Außenseite 76 erstreckt, wobei die erste Außenseite 74 zu der zweiten Außenseite 76 mit einer Materialdicke D des Materials 72 beabstandet ist. Die erste Fokuszone 18a erstreckt sich bei dem gezeigten Beispiel zumindest über die gesamte Materialdicke D. Es lässt sich dadurch beispielsweise ein sich über die gesamte Materialdicke D erstreckendes Segment 80 von dem Material 72 abtrennen.

Eine zweite Variante einer Fokuszone 18b erstreckt sich abschnittsweise durch das Material 72. Es lässt sich dadurch beispielsweise ein Segment 82 von dem material 72 abtrennen, welches ein Viertelkreisprofil aufweist (Fig. 12b). Mittels der Fokuszone 18b lässt sich beispielsweise eine Kante 84 des Materials 72 abrunden.

Eine Vorschubrichtung 86 der Fokuszone 18 relativ zu dem Material 72 ist parallel zu der Bearbeitungslinie 74 orientiert.

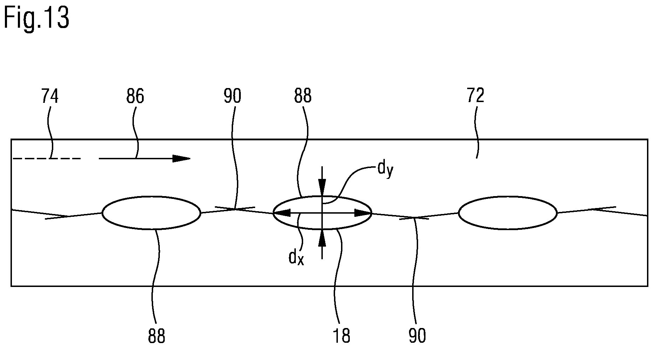

In Fig. 13 sind mehrere Modifikationsbereiche 88 gezeigt, welche durch Relativbewegung der Fokuszone 18 zu dem Material 72 ausgebildet werden. Insbesondere wird der Querschnitt der Fokuszone 18 so ausgerichtet, dass eine längere Achse des Querschnitts zumindest näherungsweise parallel zu der Vorschubrichtung 86 orientiert ist und/oder dass eine kurze Achse des Querschnitts quer und insbesondere senkrecht zu der Vorschubrichtung 86 orientiert ist.

Bei dem in Fig. 13 gezeigten Beispiel weist die Fokuszone 18 einen elliptischen Querschnitt auf. Eine größere Halbachse und/oder ein größerer Durchmesser d_{y} ist zumindest näherungsweise parallel zur Vorschubrichtung 86 orientiert.

Es lassen sich dadurch insbesondere kontrolliert Risse 90 zwischen einander benachbarten Modifikationsbereichen 88 ausbilden, wodurch sich eine optimierte Trennung des Materials 72 realisieren lässt.

Die Risse 90 sind insbesondere zumindest näherungsweise parallel zu einer kürzesten Verbindungslinie zwischen einander benachbarten Modifikationsbereichen 88 orientiert.

### Bezugszeichenliste

- β₁: Konuswinkel
- Δx: Ortsversatz
- Δb: Ortsversatz
- Δα: Winkelversatz
- dₓ: Durchmesser in x-Richtung
- d_{y}: Durchmesser in y-Richtung
- d₀: Durchmesser
- D: Materialdicke
- l: Länge
- z: longitudinale Richtung
- 10, 10': Vorrichtung
- 12: Laserquelle
- 14: Eingangslaserstrahl
- 16, 16': Strahlformungseinrichtung
- 18: Fokuszone
- 18a, 18b: Fokuszone
- 20: Strahleingangsseite
- 22: Strahlausgangsseite
- 24: Teilstrahlen
- 25: optische Achse
- 26, 26': Zwischenbild
- 27: Längsmittelachse
- 28: Sprungstelle
- 30a: erster Teilbereich
- 30b: zweiter Teilbereich
- 32a: erster Grenzpunkt
- 32b: zweiter Grenzpunkt
- 34, 34': Teleskopeinrichtung
- 36: erstes Linsenelement
- 38: zweites Linsenelement
- 40: Längsmittelachse
- 42: globale maximale Intensitätsverteilung
- 44: nebengeordnete Intensitätsverteilung
- 46: Strahlteilungseinrichtung
- 48: Fernfeldbereich
- 50: Brennebene
- 52: einfallende Strahlen
- 54a: erster Teilstrahl
- 54b: zweiter Teilstrahl
- 56: optische Achse
- 58a: erste Teilfokuszone
- 58b: zweite Teilfokuszone
- 60a: erste Längsmittelachse
- 60b: zweite Längsmittelachse
- 62: doppelbrechendes Polarisatorelement
- 64: Strahleingangsseite
- 66: optische Achse
- 68: Zwischenbild
- 69: weitere Teleskopeinrichtung
- 70: Werkstück
- 72: Material
- 74: Bearbeitungslinie
- 76: erste Außenseite
- 78: zweite Außenseite
- 80: Segment
- 82: Segment
- 84: Kante
- 86: Vorschubrichtung
- 88: Modifikationsbereich
- 90: Riss

## Patentansprüche

1. Vorrichtung zum Laserbearbeiten eines Werkstücks (70), umfassend eine Strahlformungseinrichtung (16, 16') zur Ausbildung einer Fokuszone (18) aus einem auf die Strahlformungseinrichtung (16, 16') einfallenden Eingangslaserstrahl (14) und eine Teleskopeinrichtung (34, 34') zur Abbildung der Fokuszone (18) in ein Material (72) des Werkstücks (70), wobei mittels der Strahlformungseinrichtung (16, 16') eine Phasenaufprägung auf einen Strahlquerschnitt des Eingangslaserstrahls (14) derart erfolgt, dass sich die Fokuszone (18) entlang einer zumindest abschnittsweise gekrümmten Längsmittelachse (40) erstreckt, wobei der Teleskopeinrichtung (34, 34') eine Strahlteilungseinrichtung (46) zur Aufteilung von aus der Strahlformungseinrichtung (16, 16') ausgekoppelten Teilstrahlen (24) in eine Mehrzahl von polarisierten Teilstrahlen (54a, 54b) zugeordnet ist, welche jeweils einen von mindestens zwei unterschiedlichen Polarisationszuständen aufweisen, wobei die Teleskopeinrichtung (34, 34') mit der Strahlteilungseinrichtung (16, 16') zur Fokussierung der polarisierten Teilstrahlen (54a, 54b) in eine erste Teilfokuszone (58a) aus ersten Teilstrahlen (54a) mit erstem Polarisationszustand und eine zweite Teilfokuszone (58b) aus zweiten Teilstrahlen (54b) mit zweitem Polarisationszustand ausgebildet ist, sodass die Fokuszone (18) zumindest abschnittsweise durch räumliche Überlagerung der ersten Teilfokuszone (58a) und der zweiten Teilfokuszone (58b) gebildet wird und die Fokuszone (18) in einer zu der Längsmittelachse (40) senkrecht orientierten Ebene einen asymmetrischen Querschnitt aufweist, **dadurch gekennzeichnet, dass** die Strahlteilungseinrichtung (46) ein doppelbrechendes Polarisatorelement (62) aufweist, mittels welchem sowohl ein Ortsversatz (Δx) als auch ein Winkelversatz (Δα) zwischen den aus der Strahlteilungseinrichtung (46) ausgekoppelten ersten Teilstrahlen (54a) und zweiten Teilstrahlen (54b) erzeugt wird, wobei die aus der Strahlteilungseinrichtung (46) ausgekoppelten ersten Teilstrahlen (54a) parallel zu einer optischen Achse (56) der Teleskopeinrichtung (34, 34') orientiert sind und wobei die Strahlteilungseinrichtung (46) ein in longitudinaler Richtung (z) nach dem doppelbrechenden Polarisatorelement (62) angeordnetes weiteres optisches Element aufweist, welches eingerichtet ist, um die ersten Teilstrahlen (54a) parallel zur optischen Achse (56) der Teleskopeinrichtung (34, 34') auszurichten.

2. Vorrichtung nach Anspruch 1, **dadurch gekennzeichnet, dass** sich die erste Teilfokuszone (58a) entlang einer ersten Längsmittelachse (60a) erstreckt und sich die zweite Teilfokuszone (58b) entlang einer zweiten Längsmittelachse (60b) erstreckt, wobei die erste Längsmittelachse (60a) und die zweite Längsmittelachse (60b) jeweils zumindest abschnittsweise eine gekrümmte Form aufweisen, und insbesondere **dadurch gekennzeichnet, dass** die erste Längsmittelachse (60a) und die zweite Längsmittelachse (60b) einen Ortsversatz (Δb) in einer zu der ersten Längsmittelachse (60a) und/oder der zweiten Längsmittelachse (60b) senkrecht orientierten Richtung aufweisen.

3. Vorrichtung nach Anspruch 1 oder 2, **dadurch gekennzeichnet, dass** die ersten Teilstrahlen (54a) und die zweiten Teilstrahlen (54b) zueinander inkohärent sind und/oder dass die ersten Teilstrahlen (54a) und die zweiten Teilstrahlen (54b) keine feste Phasenbeziehung zueinander aufweisen.

4. Vorrichtung nach einem der Ansprüche 1 bis 3, **dadurch gekennzeichnet, dass** die Strahlteilungseinrichtung (46) in einem Fernfeldbereich (48) der Teleskopeinrichtung (34, 34') angeordnet ist und/oder dass die Strahlteilungseinrichtung (46) zumindest näherungsweise in einer Brennebene (50) der Teleskopeinrichtung (34, 34') angeordnet ist.

5. Vorrichtung nach einem der Ansprüche 1 bis 4, **dadurch gekennzeichnet, dass** die Strahlteilungseinrichtung (46) eine Strahlteileroptik und insbesondere eine Polarisationsstrahlteileroptik ist oder umfasst, und/oder dass die Strahlteilungseinrichtung (46) mindestens ein doppelbrechendes Element und insbesondere mindestens ein doppelbrechendes Keilelement aufweist.

6. Vorrichtung nach einem der Ansprüche 1 bis 5, **dadurch gekennzeichnet, dass** mittels der Strahlteilungseinrichtung (46) einfallende Strahlen (52) jeweils in voneinander verschiedene Teilstrahlen (54a, 54b) mit unterschiedlichen Polarisationszuständen aufgeteilt werden, wobei aus der Strahlteilungseinrichtung (46) ausgekoppelte Teilstrahlen (54a, 54b) mit unterschiedlichen Polarisationszuständen einen Winkelversatz (Δα) aufweisen.

7. Vorrichtung nach einem der vorangehenden Ansprüche, **dadurch gekennzeichnet, dass** die Längsmittelachse (40) der Fokuszone (18) zumindest abschnittsweise einen Krümmungsradius von mindestens 50 µm und/oder höchstens 100 mm aufweist, und/oder dass die Längsmittelachse (40) der Fokuszone (18) einen durchschnittlichen Krümmungsradius von mindestens 200 µm und/oder höchstens 2 mm aufweist, und/oder dass die Fokuszone (18) eine Länge (l) von mindestens 50 µm und/oder höchstens 20 mm und insbesondere von mindestens 500 µm und/oder höchstens 2 mm aufweist.

8. Vorrichtung nach einem der vorangehenden Ansprüche, **dadurch gekennzeichnet, dass** die Fokuszone (18) ein quasi-nichtbeugendes und/oder Bessel-artiges Strahlprofil aufweist.

9. Vorrichtung nach einem der vorangehenden Ansprüche, **dadurch gekennzeichnet, dass** die Fokuszone (18) in einer zu der Längsmittelachse (40) der Fokuszone (18) senkrecht orientierten Ebene einen elliptischen Querschnitt aufweist, und insbesondere **dadurch gekennzeichnet, dass** ein größter Durchmesser (dₓ, d_{y}) einer Querschnittsellipse der Fokuszone (18) zumindest näherungsweise parallel zu einer Vorschubrichtung (86) ausgerichtet ist, in welche das Werkstück (70) zur Ausbildung einer Bearbeitungslinie (74) und/oder Bearbeitungsfläche relativ zu der Fokuszone (18) bewegt wird.

10. Vorrichtung nach einem der vorangehenden Ansprüche, **gekennzeichnet durch** eine Laserquelle (12) zur Bereitstellung des Eingangslaserstrahls (14), wobei mittels der Laserquelle (12) insbesondere ein gepulster Laserstrahl oder ein Ultrakurzpulslaserstrahl bereitgestellt wird.

11. Vorrichtung nach einem der vorangehenden Ansprüche, **dadurch gekennzeichnet, dass** eine Phasenverteilung von an einer Strahlausgangsseite (22) der Strahlformungseinrichtung (16, 16') ausgekoppelten Teilstrahlen (24) asymmetrisch und/oder nicht rotationssymmetrisch ist.

12. Verfahren zum Laserbearbeiten eines Werkstücks (70), bei dem mittels einer Strahlformungseinrichtung (16, 16') eine Fokuszone (18) aus einem auf die Strahlformungseinrichtung (16, 16') einfallenden Eingangslaserstrahl (14) ausgebildet wird, wobei die Fokuszone (18) mittels einer Teleskopeinrichtung (34, 34') in ein Material (72) des Werkstücks (70) abgebildet wird oder abbildbar ist, mittels der Strahlformungseinrichtung (16, 16') eine Phasenaufprägung auf einen Strahlquerschnitt des Eingangslaserstrahls (14) derart erfolgt, dass sich die Fokuszone (18) entlang einer zumindest abschnittsweise gekrümmten Längsmittelachse (40) erstreckt, mittels einer der Teleskopeinrichtung (34, 34') zugeordneten Strahlteilungseinrichtung (46) aus der Strahlformungseinrichtung (16, 16') ausgekoppelte Teilstrahlen (24) in eine Mehrzahl von polarisierten Teilstrahlen (54a, 54b) aufgeteilt werden, welche jeweils einen von mindestens zwei unterschiedlichen Polarisationszuständen aufweisen, die polarisierten Teilstrahlen (54a, 54b) in eine erste Teilfokuszone (58a) aus ersten Teilstrahlen (54a) mit erstem Polarisationszustand und eine zweite Teilfokuszone (58b) aus zweiten Teilstrahlen (54b) mit zweitem Polarisationszustand fokussiert werden, sodass die Fokuszone (18) zumindest abschnittsweise durch räumliche Überlagerung der ersten Teilfokuszone (58a) und der zweiten Teilfokuszone (58b) gebildet wird und die Fokuszone (18) in einer zu der Längsmittelachse (40) senkrecht orientierten Ebene einen asymmetrischen Querschnitt aufweist, **dadurch gekennzeichnet, dass** die Strahlteilungseinrichtung (46) ein doppelbrechendes Polarisatorelement (62) aufweist, mittels welchem sowohl ein Ortsversatz (Δx) als auch ein Winkelversatz (Δα) zwischen den aus der Strahlteilungseinrichtung (46) ausgekoppelten ersten Teilstrahlen (54a) und zweiten Teilstrahlen (54b) erzeugt wird, wobei die aus der Strahlteilungseinrichtung (46) ausgekoppelten ersten Teilstrahlen (54a) parallel zu einer optischen Achse (56) der Teleskopeinrichtung (34, 34') orientiert sind und wobei die Strahlteilungseinrichtung (46) ein in longitudinaler Richtung (z) nach dem doppelbrechenden Polarisatorelement (62) angeordnetes weiteres optisches Element aufweist, welches eingerichtet ist, um die ersten Teilstrahlen (54a) parallel zur optischen Achse (56) der Teleskopeinrichtung (34, 34') auszurichten.

## Claims

1. A device for laser processing a workpiece (70), comprising a beam shaping device (16, 16') for forming a focus zone (18) from an input laser beam (14) incident on the beam shaping device (16, 16') and a telescope device (34, 34') for imaging the focus zone (18) into a material (72) of the workpiece (70), wherein a phase imprint is applied to a beam cross-section of the input laser beam (14) by means of the beam shaping device (16, 16') in such a way that the focus zone (18) extends along a longitudinal central axis (40) which is curved at least in sections, wherein the telescope device (34, 34') is assigned a beam splitting device (46) for splitting partial beams (24) coupled out of the beam shaping device (16, 16') into a plurality of polarized partial beams (54a, 54b) which each have one of at least two different polarization states, wherein the telescope device (34, 34') is formed with the beam splitting device (16, 16') for focusing the polarized partial beams (54a, 54b) into a first partial focus zone (58a) of first partial beams (54a) with a first polarization state and a second partial focus zone (58b) of second partial beams (54b) with a second polarization state, so that the focus zone (18) is formed at least in sections by spatial superposition of the first partial focus zone (58a) and the second partial focus zone (58b) and the focus zone (18) has an asymmetrical cross-section in a plane oriented perpendicular to the longitudinal central axis (40), **characterized in that** the beam splitting device (46) has a birefringent polarizer element (62), by means of which both a spatial offset (Δx) and an angular offset (Δα) are generated between the first partial beams (54a) and second partial beams (54b) coupled out of the beam splitting device (46), wherein the first partial beams (54a) coupled out of the beam splitting device (46) are oriented parallel to an optical axis (56) of the telescope device (34, 34') and wherein the beam splitting device (46) has a further optical element, arranged in the longitudinal direction (z) downstream of the birefringent polarizer element (62), which is configured to align the first partial beams (54a) parallel to the optical axis (56) of the telescope device (34, 34').

2. The device according to claim 1, **characterized in that** the first partial focus zone (58a) extends along a first longitudinal central axis (60a) and the second partial focus zone (58b) extends along a second longitudinal central axis (60b), wherein the first longitudinal central axis (60a) and the second longitudinal central axis (60b) each have a curved shape at least in sections, and **characterized in** particular **in that** the first longitudinal central axis (60a) and the second longitudinal central axis (60b) have a spatial offset (Δb) in a direction oriented perpendicular to the first longitudinal central axis (60a) and/or the second longitudinal central axis (60b).

3. The device according to claim 1 or 2, **characterized in that** the first partial beams (54a) and the second partial beams (54b) are incoherent with respect to one another and/or **in that** the first partial beams (54a) and the second partial beams (54b) have no fixed phase relationship with respect to one another.

4. The device according to one of claims 1 to 3, **characterized in that** the beam splitting device (46) is arranged in a far-field region (48) of the telescope device (34, 34') and/or **in that** the beam splitting device (46) is arranged at least approximately in a focal plane (50) of the telescope device (34, 34').

5. The device according to one of claims 1 to 4, **characterized in that** the beam splitting device (46) is or comprises a beam splitter optics and in particular a polarization beam splitter optics, and/or **in that** the beam splitting device (46) has at least one birefringent element and in particular at least one birefringent wedge element.

6. The device according to one of claims 1 to 5, **characterized in that** beams (52) incident by means of the beam splitting device (46) are each split into partial beams (54a, 54b) that are different from one another and have different polarization states, wherein partial beams (54a, 54b) coupled out of the beam splitting device (46) and having different polarization states have an angular offset (Δα).

7. The device according to one of the preceding claims, **characterized in that** the longitudinal central axis (40) of the focus zone (18) has a radius of curvature of at least 50 µm and/or at most 100 mm, at least in sections, and/or **in that** the longitudinal central axis (40) of the focus zone (18) has an average radius of curvature of at least 200 µm and/or at most 2 mm, and/or **in that** the focus zone (18) has a length (l) of at least 50 µm and/or at most 20 mm and in particular of at least 500 µm and/or at most 2 mm.

8. The device according to one of the preceding claims, **characterized in that** the focus zone (18) has a quasi-non-diffractive and/or Bessel-like beam profile.

9. The device according to one of the preceding claims, **characterized in that** the focus zone (18) has an elliptical cross-section in a plane oriented perpendicular to the longitudinal central axis (40) of the focus zone (18), and in particular **characterized in that** a largest diameter (dₓ, d_{y}) of a cross-sectional ellipse of the focus zone (18) is aligned at least approximately parallel to a feed direction (86) in which the workpiece (70) is moved relative to the focus zone (18) for forming a processing line (74) and/or processing surface.

10. The device according to one of the preceding claims, **characterized by** a laser source (12) for providing the input laser beam (14), wherein in particular a pulsed laser beam or an ultrashort pulsed laser beam is provided by means of the laser source (12).

11. The device according to one of the preceding claims, **characterized in that** a phase distribution of partial beams (24) coupled out at a beam output side (22) of the beam shaping device (16, 16') is asymmetrical and/or not rotationally symmetrical.

12. A method for laser processing a workpiece (70), in which a focus zone (18) is formed by means of a beam shaping device (16, 16') from an input laser beam (14) incident on the beam shaping device (16, 16'), wherein the focus zone (18) is imaged or can be imaged by means of a telescope device (34, 34') into a material (72) of the workpiece (70), a phase imprint is applied to a beam cross-section of the input laser beam (14) by means of the beam shaping device (16, 16') in such a way that the focus zone (18) extends along a longitudinal center axis (40) which is curved at least in sections, partial beams (24) coupled out of the beam shaping device (16, 16') are split into a plurality of polarized partial beams (54a, 54b) by means of a beam splitting device (46) assigned to the telescope device (34, 34'), which each have one of at least two different polarization states, the polarized partial beams (54a, 54b) are focused into a first partial focus zone (58a) consisting of first partial beams (54a) with a first polarization state and a second partial focus zone (58b) consisting of second partial beams (54b) with a second polarization state, so that the focus zone (18) is formed at least in sections by spatial superposition of the first partial focus zone (58a) and the second partial focus zone (58b) and the focus zone (18) has an asymmetrical cross-section in a plane oriented perpendicular to the longitudinal central axis (40), **characterized in that** the beam splitting device (46) has a birefringent polarizer element (62), by means of which both a spatial offset (Δx) and an angular offset (Δα) are generated between the first partial beams (54a) and second partial beams (54b) coupled out of the beam splitting device (46), wherein the first partial beams (54a) coupled out of the beam splitting device (46) are oriented parallel to an optical axis (56) of the telescope device (34, 34') and wherein the beam splitting device (46) has a further optical element, arranged in the longitudinal direction (z) downstream of the birefringent polarizer element (62), which is configured to align the first partial beams (54a) parallel to the optical axis (56) of the telescope device (34, 34').

## Revendications

1. Dispositif pour le traitement au laser d'une pièce (70), comprenant un équipement de mise en forme de faisceau (16, 16') pour la formation d'une zone de focalisation (18) à partir d'un faisceau laser d'entrée (14) incident sur l'équipement de mise en forme de faisceau (16, 16') et un équipement télescopique (34, 34') pour la projection de la zone de focalisation (18) dans un matériau (72) de la pièce (70), dans lequel une modulation de phase est appliquée sur une section transversale de faisceau du faisceau laser d'entrée (14) au moyen de l'équipement de mise en forme de faisceau (16, 16') de telle sorte que la zone de focalisation (18) s'étend le long d'un axe longitudinal médian (40) du moins partiellement courbé, dans lequel l'équipement télescopique (34, 34') est associé à un équipement de division de faisceau (46) pour la répartition des faisceaux partiels (24) découplés hors de l'équipement de mise en forme de faisceau (16, 16') en une pluralité de faisceaux partiels polarisés (54a, 54b), présentant chacun un parmi au moins deux états de polarisation distincts, dans lequel l'équipement télescopique (34, 34') est conçu avec l'équipement de division de faisceau (16, 16') pour la focalisation des faisceaux partiels polarisés (54a, 54b) en une première zone de focalisation partielle (58a) à partir des premiers faisceaux partiels (54a) avec un premier état de polarisation et une deuxième zone de focalisation partielle (58b) à partir des deuxièmes faisceaux partiels (54b) avec un deuxième état de polarisation, de sorte que la zone de focalisation (18) soit formée du moins partiellement par superposition spatiale de la première zone de focalisation partielle (58a) et de la deuxième zone de focalisation partielle (58b) et que la zone de focalisation (18) présente une section transversale asymétrique dans un plan orienté perpendiculairement à l'axe longitudinal médian (40), **caractérisé en ce que** l'équipement de division de faisceau (46) présente un élément polarisateur biréfringent (62), au moyen duquel sont générés à la fois un décalage spatial (Δx) et un décalage angulaire (Δα) entre les premiers faisceaux partiels (54a) et les deuxièmes faisceaux partiels (54b) découplés hors de l'équipement de division de faisceau (46), dans lequel les premiers faisceaux partiels (54a) découplés hors de l'équipement de division de faisceau (46) sont orientés parallèlement à un axe optique (56) de l'équipement télescopique (34, 34') et dans lequel l'équipement de division de faisceau (46) présente un autre élément optique disposé dans la direction longitudinale (z) après l'élément polarisateur biréfringent (62), configuré pour aligner les premiers faisceaux partiels (54a) parallèlement à l'axe optique (56) de l'équipement télescopique (34, 34').

2. Dispositif selon la revendication 1, **caractérisé en ce que** la première zone de focalisation partielle (58a) s'étend le long d'un premier axe longitudinal médian (60a) et **en ce que** la deuxième zone de focalisation partielle (58b) s'étend le long d'un deuxième axe longitudinal médian (60b), dans lesquels le premier axe longitudinal médian (60a) et le deuxième axe longitudinal médian (60b) présentent chacun du moins partiellement une forme courbée, et notamment **en ce que** le premier axe longitudinal médian (60a) et le deuxième axe longitudinal médian (60b) présentent un décalage spatial (Δb) dans une direction orientée perpendiculairement au premier axe longitudinal médian (60a) et/ou au deuxième axe longitudinal médian (60b).

3. Dispositif selon la revendication 1 ou 2, **caractérisé en ce que** les premiers faisceaux partiels (54a) et les deuxièmes faisceaux partiels (54b) sont incohérents les uns avec les autres et/ou **en ce que** les premiers faisceaux partiels (54a) et les deuxièmes faisceaux partiels (54b) n'ont pas de relation de phase fixe les uns avec les autres.

4. Dispositif selon l'une des revendications 1 à 3, **caractérisé en ce que** l'équipement de division de faisceau (46) est disposé dans une section de champ lointain (48) de l'équipement télescopique (34, 34') et/ou **en ce que** l'équipement de division de faisceau (46) est disposé du moins approximativement dans un plan focal (50) de l'équipement télescopique (34, 34').

5. Dispositif selon l'une des revendications 1 à 4, **caractérisé en ce que** l'équipement de division de faisceau (46) est ou comprend une optique séparatrice de faisceau et notamment une optique séparatrice de faisceau par polarisation, et/ou **en ce que** l'équipement de division de faisceau (46) présente au moins un élément biréfringent, et notamment au moins un élément en coin biréfringent.

6. Dispositif selon l'une des revendications 1 à 5, **caractérisé en ce que** les faisceaux incidents (52) sont répartis respectivement au moyen de l'équipement de division de faisceau (46) en faisceaux partiels (54a, 54b) différents les uns des autres avec des états de polarisation distincts, dans lesquels les faisceaux partiels (54a, 54b) découplés hors de l'équipement de division de faisceau (46) présentent un décalage angulaire (Δα) avec des états de polarisation distincts.

7. Dispositif selon l'une des revendications précédentes, **caractérisé en ce que** l'axe longitudinal médian (40) de la zone de focalisation (18) présente du moins partiellement un rayon de courbure d'au moins 50 µm et/ou de 100 mm au plus, et/ou **en ce que** l'axe longitudinal médian (40) de la zone de focalisation (18) présente un rayon de courbure moyen d'au moins 200 µm et/ou de 2 mm au plus, et/ou **en ce que** la zone de focalisation (18) présente une longueur (l) d'au moins 50 µm et/ou de 20 mm au plus, et notamment d'au moins 500 µm et/ou de 2 mm au plus.

8. Dispositif selon l'une des revendications précédentes, **caractérisé en ce que** la zone de focalisation (18) présente un profil de faisceau quasi non diffractant et/ou de type Bessel.

9. Dispositif selon l'une des revendications précédentes, **caractérisé en ce que** la zone de focalisation (18) présente une section transversale elliptique dans un plan orienté perpendiculairement à l'axe longitudinal médian (40) de la zone de focalisation (18), et notamment **en ce qu'**un diamètre maximum (dₓ, d_{y}) d'une ellipse de section transversale de la zone de focalisation (18) est du moins approximativement aligné parallèlement à une direction de progression (86), dans laquelle la pièce (70) est déplacée par rapport à la zone de focalisation (18) pour la formation d'une ligne de traitement (74) et/ou d'une surface de traitement.

10. Dispositif selon l'une des revendications précédentes, **caractérisé par** une source laser (12) pour la mise à disposition du faisceau laser d'entrée (14), dans lequel un faisceau laser pulsé ou un faisceau laser à impulsions ultra-courtes est notamment mis à disposition au moyen de la source laser (12).

11. Dispositif selon l'une des revendications précédentes, **caractérisé en ce qu'**une distribution de phases des faisceaux partiels (24) découplés sur un côté de sortie de faisceau (22) de l'équipement de mise en forme de faisceau (16, 16') est asymétrique et/ou non symétrique en rotation.

12. Procédé pour le traitement au laser d'une pièce (70), selon lequel, au moyen d'un équipement de mise en forme de faisceau (16, 16'), une zone de focalisation (18) est conçue à partir d'un faisceau laser d'entrée (14) incident sur l'équipement de mise en forme de faisceau (16, 16'), dans lequel la zone de focalisation (18) est projetée ou peut être projetée dans un matériau (72) de la pièce (70) au moyen d'un équipement télescopique (34, 34'), une modulation de phase étant appliquée sur une section transversale de faisceau du faisceau laser d'entrée (14) au moyen de l'équipement de mise en forme de faisceau (16, 16'), de telle sorte que la zone de focalisation (18) s'étende le long d'un axe longitudinal médian (40) du moins partiellement courbé, des faisceaux partiels (24) découplés hors de l'équipement de mise en forme de faisceau (16, 16') étant divisés au moyen d'un équipement de division de faisceau (46) associé à l'équipement télescopique (34, 34') en une pluralité de faisceaux partiels polarisés (54a, 54b), présentant chacun un parmi au moins deux états de polarisation distincts, les faisceaux partiels polarisés (54a, 54b) étant focalisés en une première zone de focalisation partielle (58a) à partir des premiers faisceaux partiels (54a) avec un premier état de polarisation et une deuxième zone de focalisation partielle (58b) à partir des deuxièmes faisceaux partiels (54b) avec un deuxième état de polarisation, de telle sorte que la zone de focalisation (18) est formée du moins partiellement par superposition spatiale de la première zone de focalisation partielle (58a) et de la deuxième zone de focalisation partielle (58b), et que la zone de focalisation (18) présente une section transversale asymétrique dans un plan orienté perpendiculairement à l'axe longitudinal médian (40), **caractérisé en ce que** l'équipement de division de faisceau (46) présente un élément polarisateur biréfringent (62), au moyen duquel sont générés à la fois un décalage spatial (Δx) et un décalage angulaire (Δα) entre les premiers faisceaux partiels (54a) et les deuxièmes faisceaux partiels (54b) découplés hors de l'équipement de division de faisceau (46), dans lequel les premiers faisceaux partiels (54a) découplés hors de l'équipement de division de faisceau (46) sont orientés parallèlement à un axe optique (56) de l'équipement télescopique (34, 34'), et dans lequel l'équipement de division de faisceau (46) présente un autre élément optique disposé dans la direction longitudinale (z) après l'élément polarisateur biréfringent (62), configuré pour aligner les premiers faisceaux partiels (54a) parallèlement à l'axe optique (56) de l'équipement télescopique (34, 34').
